# EUROPEAN PATENT APPLICATION

(11) **EP 3 975 061 A1**
(43) Date of publication of application: **30.03.2022**
(21) Application number: 20900328.4
(22) Date of filing: 04.12.2020
(51) Int. Cl.: G06N 3/063

(54) **NEURAL NETWORK PROCESSOR, CHIP AND ELECTRONIC DEVICE**

(30) Priority: 09.12.2019 CN 201911253111
(71) Applicant: GUANGDONG OPPO MOBILE TELECOMMUNICATIONS CORP., LTD., Dongguan, Guangdong 523860 (CN)
(72) Inventor: YUAN, Shengguang, Dongguan, Guangdong 523860 (CN)
(74) Representative: Thorniley, Peter
(86) International application number: PCT/CN2020/133905
(87) International publication number: WO 2021/115208

(57) **Abstract**

The embodiments of the present disclosure provide a neural network processor (200), a chip (20) and an electronic device (20). The neural network processor (200) includes a data migration engine (204), a general register (290) and a scalar processing unit (232). The general register (290) is coupled to the data migration engine (204). The scalar processing unit (232) comprising a plurality of scalar registers (2322). The data migration engine (204) is coupled to at least one of the scalar registers (2322). The data migration engine (204) is configured to cause data interaction between the scalar processing unit (232) and the general register (290). The embodiments of the application can improve the efficiency of the neural network processor (200) processing data.

## Description

### TECHNICAL FIELD

The present disclosure relates to the field of electronic technologies, and more particularly, to a neural network processor, a chip, and an electronic device.

### BACKGROUND

Artificial neural networks can abstract a neural network from the perspective of information processing, establish a certain simple model, and form different networks according to different connection manners. These research techniques are typically known as deep learning, machine learning, and/or other similar terms.

In related technologies, a neural network processor is configured to perform different calculation processing through different processing units, and can obtain calculation results or intermediate calculation results. The intermediate calculation results can be transferred to the external memory for some processing before being fed back to the processing units of the neural network processor for further calculation operations.

### SUMMARY

The present disclosure provides a neural network processor, a chip and an electronic device.

Embodiments of the present disclosure provides a neural network processor, which includes a scalar processing unit, a general register and a data migration engine. The general register coupled to the data migration engine. The scalar processing unit including a plurality of scalar registers. The data migration engine is coupled to at least one of the scalar registers. The data migration engine is configured to cause data interaction between the scalar processing unit and the general register.

Embodiments of the present disclosure provides a chip. The chip includes a system bus, an external memory, and a central processing unit. The neural network processor is coupled to the external memory and the central processing unit via the system bus, the neural network processor is controlled by the central processing unit to acquire data to-be-processed from the external memory, process the data to-be-processed to form a processing result, and feedback the processing result to the external memory. The neural network processor includes a scalar processing unit, a general register and a data migration engine. The general register coupled to the data migration engine. The scalar processing unit including a plurality of scalar registers. The data migration engine is coupled to at least one of the scalar registers. The data migration engine is configured to cause data interaction between the scalar processing unit and the general register.

Embodiments of the present disclosure provides an electronic device. The electronic device includes a system bus, an external memory, and a central processing unit. The neural network processor is coupled to the external memory and the central processing unit via the system bus, the neural network processor is controlled by the central processing unit to acquire data to-be-processed from the external memory, process the data to-be-processed to form a processing result, and feedback the processing result to the external memory. The neural network processor includes a scalar processing unit, a general register and a data migration engine. The general register coupled to the data migration engine. The scalar processing unit including a plurality of scalar registers. The data migration engine is coupled to at least one of the scalar registers. The data migration engine is configured to cause data interaction between the scalar processing unit and the general register.

### BRIEF DESCRIPTION OF THE DRAWINGS

In order to more clearly describe the technical solutions in the embodiments of the present disclosure, the following briefly introduces the drawings needed to be used in the description of the embodiments.
FIG. 1 is a schematic diagram showing a first structure of a neural network processor according to an embodiment of the present disclosure.
FIG. 2 is a schematic diagram showing a second structure of a neural network processor according to an embodiment of the present disclosure.
FIG. 3 is a schematic diagram showing a third structure of a neural network processor according to an embodiment of the present disclosure.
FIG. 4 is a schematic diagram showing a fourth structure of a neural network processor according to an embodiment of the present disclosure.
FIG. 5 is a schematic diagram showing a fifth structure of a neural network processor according to an embodiment of the present disclosure.
FIG. 6 is a structural diagram of a data storage module according to an embodiment of the present disclosure.
FIG. 7 is a schematic diagram showing a sixth structure of a neural network processor according to an embodiment of the present disclosure.
FIG. 8 is a schematic diagram showing a seventh structure of a neural network processor according to an embodiment of the present disclosure.
FIG. 9 is a schematic diagram showing an eighth structure of a neural network processor according to an embodiment of the present disclosure.
FIG. 10 is a schematic diagram showing a ninth structure of a neural network processor according to an embodiment of the present disclosure.
FIG. 11 is a schematic diagram showing a tenth structure of a neural network processor according to an embodiment of the present disclosure.
FIG. 12 is a schematic diagram showing a first structure of a Direct Memory Access (DMA) in a neural network process according to an embodiment of the present disclosure.
FIG. 13 is a schematic diagram showing a second structure of a DMA in a neural network process according to an embodiment of the present disclosure.
FIG. 14 is a schematic diagram showing an eleventh structure of a neural network processor according to an embodiment of the present disclosure.
FIG. 15 is a schematic diagram showing a third structure of a DMA in a neural network process according to an embodiment of the present disclosure.
FIG. 16 is a schematic diagram showing a twelfth structure of a neural network processor according to an embodiment of the present disclosure.
FIG. 17 is a schematic diagram showing a thirteenth structure of a neural network processor according to an embodiment of the present disclosure.
FIG. 18 is a schematic diagram showing a fourteenth structure of a neural network processor according to an embodiment of the present disclosure.
FIG. 19 is a schematic diagram showing a fifteenth structure of a neural network processor according to an embodiment of the present disclosure.
FIG. 20 is a schematic diagram showing a sixteenth structure of a neural network processor according to an embodiment of the present disclosure.
FIG. 21 is a schematic diagram showing a seventeenth structure of a neural network processor according to an embodiment of the present disclosure.
FIG. 22 is a schematic diagram showing an eighteenth structure of a neural network processor according to an embodiment of the present disclosure.
Fig. 23 is a schematic diagram showing a convolution operation of a convolution processing unit in a neural network processor according to an embodiment of the present disclosure.
FIG. 24 is a structural diagram of a chip according to an embodiment of the present disclosure.
FIG. 25 is a structural diagram of an electronic device according to an embodiment of the present disclosure.
FIG. 26 is a schematic flowchart of a data processing method according to an embodiment of the present disclosure.
FIG. 27 is a schematic flowchart of a data processing method according to another embodiment of the present disclosure.
FIG. 28 is a schematic flowchart of a data loading method according to an embodiment of the present disclosure.

### DETAILED DESCRIPTION OF PREFERRED EMBODIMENTS

The technical solutions provided by the embodiments of the present disclosure can be applied to various scenarios that require image processing on input images to obtain corresponding output images, and these scenarios are not limited in the embodiments of the present disclosure. For instance, the technical solutions provided by the embodiments of the present disclosure can be applied to various scenarios in the fields of computer vision, such as face recognition, image classification, target detection, and semantic segmentation.

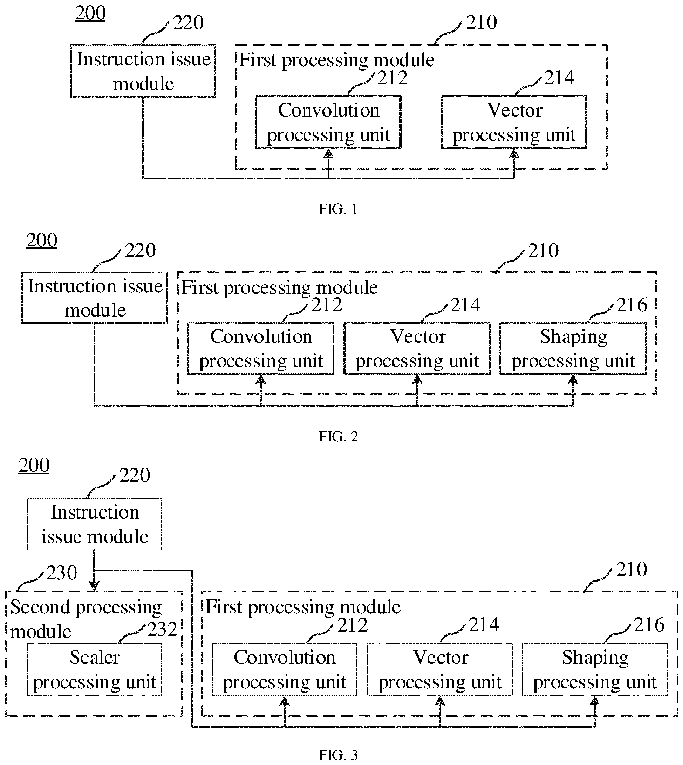

FIG. 1 illustrates a first structure of a neural network processor according to an embodiment of the present disclosure. A neural network processor (NNP, also referred to as neural network process unit, NPU) 200 may include a first processing module 210 and an instruction issue module 220.

The first processing module 210 may include one or more processing units, such as a convolution processing unit 212 and a vector processing unit 214. The one or more processing units included in the first processing module 210 each may be able to process vectors. It can be noted that the embodiments of the present disclosure do not limit the type of data processed by the first processing module 210.

The convolution processing unit 212 may also be referred to as a convolution operation unit or a convolution calculation engine. The convolution processing unit 212 may include a number of multiply accumulate (MAC) units. The number of the MAC units may be several thousand. For instance, the convolution processing unit 212 may include 4096 MAC units which can be classified into 16 cells, and each cell can calculate dot product whose maximum number of elements is 256.

The vector processing unit 214 may also be referred to as a vector calculation unit or a single instruction a plurality of data (SIMD) processing unit. The vector processing unit 214 is a bitwise vector calculation engine that can process regular arithmetic operations such as addition, subtraction, multiplication, and division between vectors, and can also process bitwise logical operations such as AND, OR, NOT, XOR and the like. It can be noted that the vector processing unit 214 of the embodiments of the present disclosure may also support common activation functions such as rectified linear unit (ReLU), PRelu, and the like. It can also be noted that the vector processing unit 214 of the embodiments of the present disclosure may also support nonlinear activation functions, such as Sigmoid and Tanh, through looking up tables.

The instruction issue module 220 may also be referred to as an instruction pre-processing module. The instruction issue module 220 is coupled to every processing unit included in the first processing module 210. For instance, the instruction issue module 220 is coupled to the convolution processing unit 212 and/or the vector processing unit 214. The instruction issue module 220 can be configured to issue instructions to the first processing module 210, that is, the instruction issue module 220 can be configured to issue instructions to the one or more processing units of the first processing module 210.

In some embodiments, the instruction issue module 220 can be configured to issue a plurality of instructions to the first processing module 210 in parallel. For instance, the instruction issue module 220 may be configured to issue a plurality of instructions to each of the convolution processing unit 212 and the vector processing unit 214 in parallel. For instance, the instruction issue module 220 can be configured to issue a plurality of instructions, in a clock cycle, to the convolution processing unit 212 and the vector processing unit 214 in parallel. Thus, the embodiments of the present disclosure support multi-issue instruction operations and can be configured to execute a plurality of instructions simultaneously. For example, the convolution processing unit 212 and the vector processing unit 214 can be configured to execute convolution calculating instructions and vector calculating instructions, respectively. After the convolution processing unit 212 and the vector processing unit 214 receive their respective instructions, the convolution processing unit 212 and the vector processing unit 214 process their respective received data according to their respective instructions to obtain processing results. Thus, the embodiments of the present disclosure can improve the calculation efficiency, in other words, the disclosure can improve the efficiency of the NPU in processing data.

It can be understood that the processing units, corresponding to the plurality of instructions issued by the instruction issue module 220 in parallel, have no resource conflicts during the execution.

The plurality of instructions issued by the instruction issue module 220 may include fine-grained instructions. The instruction issue module 220 can be configured to issue the fine-grained instructions to the convolution processing unit 212. After receiving the fine-grained instructions, the convolution processing unit 212 can perform, according to the received fine-grained instructions, a dot product operation on received data (e.g., data received by the convolution processing unit 212).

It can be understood that the instruction issue module 220 is not limited to issue the fine-grained instructions to the convolution processing unit 212. The instruction issue module 220 may also issue at least one of the fine-grained instructions to the vector processing unit 214 or any other processing units included in the first processing module 210.

The instructions that can be issued by the instruction issue module 220 in the embodiments of the present disclosure are not limited to the fine-grain instructions. The embodiments of the present disclosure do not limit the instructions that can be issued by the instruction issue module 220. It can be noted that, the instructions that can be issued may include different types of instructions, such as calculation-type instructions, control-type instructions, etc., where the calculation-type instructions may include a first calculation instruction, a second calculation instruction, and a third calculation instruction.

The operation corresponding to the fine-grained instruction accurately corresponds to each clock cycle, it is different from a coarse-grained processor, that is, it is different that, one coarse-grained instruction requires more than one clock cycles to be executed and completed by the processor. It can also be understood that fine-grained instructions are reflected in the granularity of the processing unit is relatively fine. For instance, the convolution processing unit 212 can complete a basic dot product operation based on one fine-grained instruction, while the coarse-grained processor can complete a matrix multiplication operation based on one coarse-grained instruction. It can be understood that the matrix multiplication operation consists of a number of dot product operations. It can be seen that the embodiments of the present disclosure can support multi-issue fine-grained instruction operations, can improve the flexibility of programming, and has better versatility.

The instruction issue module 220 may be configured to issue the first calculation instruction and the second calculation instruction in parallel to the convolution processing unit 212 and the vector processing unit 214, respectively. For instance, the instruction issue module 220 is configured to issue the first calculation instruction to the convolution processing unit 212 and is configured to issue the second calculation instruction to the vector processing unit 214, within one clock cycle. The convolution processing unit 212 can perform, according to the first calculation instruction issued by the instruction issue module 220, a dot product operation on received data. The vector processing unit 214 may perform, according to the second calculation instruction issued by the instruction issue module 220, a vector computing operation on received data.

It can be noted that the processing units included in the first processing module 210 are not limited to the convolution processing unit 212 and the vector processing unit 214, the first processing module 210 may also include one or more other processing units such as a shaping processing unit.

FIG. 2 illustrates a second structure of a neural network processor according to an embodiment of the present disclosure. A first processing module 210 of a neural network processor 200, provided by the embodiment of the present disclosure, may include a convolution processing unit 212, a vector processing unit 214, and a shaping processing unit 216. The convolution processing unit 212 and the vector processing unit 214 of this embodiment may refer to the convolution processing unit 212 and the vector processing unit 214 shown in FIG. 1, and will not be repeated here. The shaping processing unit 216 can also be referred to as a shaping engine.

The shaping processing unit 216 is coupled to an instruction issue module 220. The instruction issue module 220 may be configured to issue a number of instructions to the convolution processing unit 212, the vector processing unit 214, and the shaping processing unit 216 in parallel. For instance, the instruction issue module 220 can be configured to issue a number of instructions to the convolution processing unit 212, the vector processing unit 214, and the shaping processing unit 216 in parallel, within one clock cycle. The shaping processing unit 216 may be configured to perform, according to one or more particular instructions such as a third calculation instruction issued by the instruction issue module 220, data processing on received data. The shaping processing unit 216 can be configured to support common Reshape operations in Tensor, such as dimension transposition, segmentation according to a dimension, data padding, etc.

It can be noted that the instruction issue module 220 is not limited to be configured to issue instructions to the first processing module 210. In other embodiments, the instruction issue module 220 may also be configured to issue one or more instructions to one or more other processing modules.

FIG. 3 illustrates a third structure of a neural network processor according to an embodiment of the present disclosure. A neural network processor 200 provided by this embodiment may include a first processing module 210, a second processing module 230, and an instruction issue module 220. The first processing module 210 at least includes a convolution processing unit 212, and can also include one or more other processing units such as a vector processing unit 214 and a shaping processing unit 216. The convolution processing unit 212 is configured to perform dot product operations on the data it is configured to receive, details of which can refer to the above content and are not repeated here again. The vector processing unit 214 can refer to the above content and details are not repeated here. The shaping processing unit 216 also can refer to the above content and details are not repeated here again.

The second processing module 230 is configured to process scalar data, and at least includes a scalar processing unit (SPU) 232. The scalar processing unit 232 may be a processing unit compatible with a RISC-V instruction set. The scalar processing unit 232 may include a scalar register file (SRF), that is, the scalar processing unit 232 may include a plurality of scalar registers.

The instruction issue module 220 is coupled to both the first processing module 210 and the second processing module 230, and the instruction issue module 220 can be configured to issue a plurality of instructions to each of the first processing module 210 and the second processing module 230 in parallel. For instance, the instruction issue module 220 is configured to issue a plurality of instructions to the convolution processing unit 212 and the scalar processing unit 232 in parallel within one clock cycle.

It can be understood that, if the first processing module 210 further includes one or more other processing units, the instruction issue module 220 may also be configured to issue more than one instruction to the one or more other processing units in parallel within one clock cycle. For example, the instruction issue module 220 is configured to issue a number of instructions to the convolution processing unit 212, the vector processing unit 214, and the scalar processing unit 232 in parallel within one clock cycle. For another example, the instruction issue module 220 is configured to issue a number of instructions in parallel to the convolution processing unit 212, the shaping processing unit 216, and the scalar processing unit 232, in one clock cycle. For still another example, the instruction issue module 220 is configured to issue a number of instructions, in one clock cycle, to the convolution processing unit 212, the vector processing unit 214, the shaping processing unit 216, and the scalar processing unit 232 in parallel.

It can also be understood that in practical processes, the instruction issue module 220 is not limited to the above. The instruction issue module 220 can be configured to issue, according to requirements of the neural network processor 200 to process data, different instructions in parallel to one or more processing units included in the same processing module, or different instructions in parallel to one or more processing units in different processing modules. The above are just a few examples of how the instruction issue module 220 is configured to issue a plurality of instructions in parallel in the technical solution provided by the embodiment. The manner in which the instruction issue module 220 of the technical solution provided in the embodiment is configured to issue instructions is not limited to this. For example, the instruction issue module 220 is configured to issue a plurality of instructions to the scalar processing unit 232 and the vector processing unit 214 in parallel. For another example, the instruction issue module 220 is configured to issue a plurality of instructions to the shaping processing unit 216 and the vector processing unit 214 in parallel.

The scalar processing unit 232 is configured to processe received data according to one or more instructions issued by the instruction issue module 220, such as one or more control instructions. The scalar processing unit 232 may be configured to receive one or more scalar instructions, such as one or more control instructions. The scalar processing unit 232 can be mainly responsible for scalar operations in the neural network processor 200.

It can be noted that the scalar processing unit 232 can be configured to not only receive instructions from the instruction issue module 220, but also be configured to transmit a new program counter (PC) value to the instruction issue module 220.

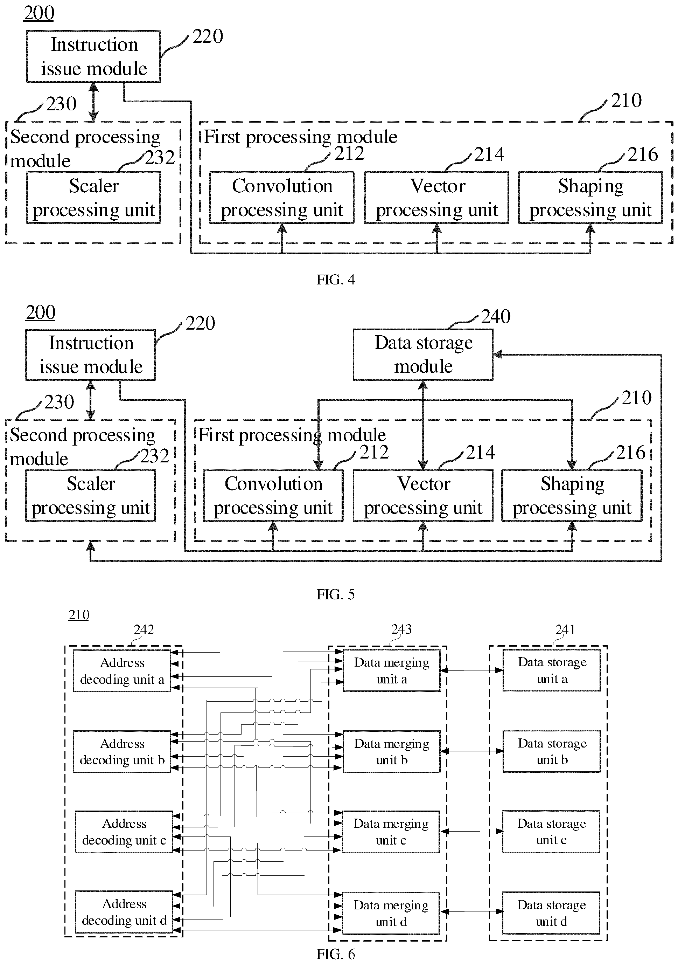

FIG. 4 illustrates a fourth structure of a neural network processor according to an embodiment of the present disclosure. A scalar processing unit 232 can be configured to not only receive instructions from an instruction issue module 220, but also transmit a new PC value to the instruction issue module 220. The scalar processing unit 232 can be configured to execute scalar computing instructions (e.g., arithmetic operations such as addition, subtraction, multiplication, and division, and logical operations), branch instructions (e.g., conditional judgment operations), and jump instructions (e.g., function call operations). When processing branch instructions and jump instructions, the scalar processing unit 232 is configured to return the new PC value to the instruction issue module 220, so that the instruction issue module 220 is configured to fetche instructions form the new PC when issuing instructions next time.

FIG. 5 illustrates a fifth structure of a neural network processor according to an embodiment of the present disclosure. A neural network processor 200 provided by this embodiment further includes a data storage module (also referred to as Buffer, BUF) 240. The data storage module 240 is configured to store data, such as image data, weight data, etc.

The data storage module 240 is coupled to a first processing module 210 and/or a second processing module 230. For instance, the data storage module 240 is coupled to each of a scalar processing unit 232, a convolution processing unit 212, a vector processing unit 214, and a shaping processing unit 216. The data storage module 240 can be configured to transmit data to each of the scalar processing unit 232, the convolution processing unit 212, the vector processing unit 214, and the shaping processing unit 216. For instance, the data storage module 240 can be configured to transmit data directly to each of the scalar processing unit 232, the convolution processing unit 212, the vector processing unit 214, and the shaping processing unit 216. Thus, this embodiment of the present disclosure can cause direct data transmission between the data storage module 240 and every processing unit such as the convolution processing unit 212 and the vector processing unit 214, thereby improving the performance of the neural network processor 200.

The data processing performed by the first processing module 210 may be as follows in detail. When the convolution processing unit 212 and the vector processing unit 214 are configured to receive instructions issued in parallel by the instruction issue module 220, such as the first calculation instruction and the second calculation instruction, the convolution processing unit 212 and the vector processing unit 214 can be configured to read data required to be processed such as data to-be-processed from the data storage module 240, then the convolution processing unit 212 and the vector processing unit 214 are configured to perform processing operations on the data to-be-processed to obtain one or more processing results, finally the processing results are stored in the data storage module 240.

The data processing performed by the convolution processing unit 212 and the vector processing unit 214 may be as follows in detail. When the convolution processing unit 212 is configured to receive one or more instruction issued by the instruction issue module 220, such as a first calculation instruction, the convolution processing unit 212 is configured to read data required to be processed by itself, such as the data to-be-processed, form the data storage module 240. After reading the data required to be processed, the convolution processing unit 212 is configured to perform, according to the first calculation instruction, a corresponding operation such as a dot product calculation to obtain an intermediate calculation result. The convolution processing unit 212 may be configured to store the intermediate calculation result into the data storage module 240. Then, the vector processing unit 214 may be configured to acquire the intermediate calculation result from the data storage module 240, and be configured to perform a second calculation process such as a pooling operation on the intermediate calculation result, so as to obtain the processing result, and then the processing result is stored in the data storage module 240.

Data stored in the data storage module 240 may include raw data and weight data, such as the data to-be-processed. In other words, the data stored in the data storage module 240 requires at least one processing unit for processing such as calculation processing. The data stored in the data storage module 240 may also include one or more processing results, in other words, the data stored in the data storage module 240 has been processed by at least one processing unit. It can be noted that the data actually stored in the data storage module 240 is not limited to this, and the data storage module 240 may also be configured to store other data.

It can be noted that the data processing performed by the convolution processing unit 212 and the vector processing unit 214 is not limited to this. The convolution processing unit 212 and the vector processing unit 214 may be directly connected to each other through a signal line.

The data processing performed by the convolution processing unit 212 and the vector processing unit 214 may also be as follows in detail. When the convolution processing unit 212 is configured to receive one or more instructions issued by the instruction issue module 220, such as the first calculation instruction, the convolution processing unit 212 is configured to read the data required to be processed by itself, such as the data to-be-processed, from the data storage module 240. After the convolution processing unit 212 is configured to read the data to-be-processed from the data storage module 240, the convolution processing unit 212 is configured to perform, according to the first calculation instruction, a corresponding operation such as a dot product calculation to obtain an intermediate calculation result. The convolution processing unit 212 is configured to transmit the intermediate calculation result to the vector processing unit 214. Then the vector processing unit 214 is configured to perform a second calculation process on the intermediate calculation result, such as pooling processing, subsequent activation, quantization operation, or being blended with an operation of a next layer to simultaneously process operations of the two layers, thereby to obtain the processing result. Finally, the processing result is stored in the data storage module 240.

It can be noted that the convolution processing unit 212 may also be coupled to one or more other processing units of the first processing module 210, such as a shaping processing unit 216, through a signal line. The data processing performed by the first processing module 210 may also include that, the convolution processing unit 212 is configured to directly transmit the intermediate calculation result to the shaping processing unit 216 or other processing units included in the first processing module 210, to perform other calculation operations. The data processing performed by the first processing module 210 may also include the follows: the convolution processing unit is configured to store the intermediate calculation result to the data storage module 240; the shaping processing unit 216 or other processing units included in the first processing module 210 acquire the intermediate calculation result and is configured to perform a further processing operation such as a shaping processing operation, so as to obtain the processing result; and finally the shaping processing unit 216 or other processing units included in the first processing module 210 store the processing result in the data storage module 240.

During the processing units of the first processing module 210 is configured to transmit data there between for processing, the intermediate calculation result may not be stored in the data storage module 240. That is, the data storage module 240 is configured to store raw data and weight data, rather than the intermediate calculation result. This not only saves the dedicated space of the data storage module 240, but also reduces access to the data storage module 240, so the power consumption is reduced and the performance of the neural network processor 200 is improved.

The manner of processing data among other processing units included in the first processing module 210 can be referred to the manner of processing data between the convolution processing unit 212 and the vector processing unit 214 as described above. And the manner of processing data among other processing units included in the first processing module 210 is not illustrated one by one here again.

The data storage module 240 of the embodiment can be configured to store calculation results. During operation processes of the processing units, 0 fallback can be achieved to the external memory, and there is no fallback to a calculation result of a previous operator to the external memory. The bandwidth requirement for soc is relatively low, thereby saving the system bandwidth and reducing the calculation delay among operators.

In some embodiments, the data storage module 240 may be a shared storage module. The data storage module 240 may have a number of Banks that can be accessed in parallel, e.g., three Banks, four Banks, and so on. The data storage module 240 can be divided flexibly according to practical requirements.

FIG. 6 illustrates a schematic structure of a data storage module according to an embodiment of the present disclosure. The data storage module 240 includes at least two data storage units 241 and at least two address decoding units 242. The number of the address decoding units 242 is not greater than the number of the data storage units 241. For example, the number of the data storage units 241 is four, and the number of the address decoding units 242 is four. Each address decoding unit includes four output ports, each of which corresponds to one of the data storage units 241. Four data storage units 241, for example, are a data storage unit A, a data storage unit B, a data storage unit C, and a data storage unit D. Four address decoding units 242, for example, are an address decoding unit A, an address decoding unit B, an address decoding unit C, and an address decoding unit D.

The four address decoding units 242 are all coupled to one of the data storage units 241. Each address decoding unit 242 includes four output ports. The number of the output ports of every address decoding unit 242 is equal to the number of the data storage units included in the data storage module 240. That is, the output ports of each address decoding unit 242 correspond to the data storage units 241 one by one. For example, among the four output ports of each address decoding unit, a first output port corresponds to the data storage unit A, a second output port corresponds to the data storage unit B, a third output port corresponds to the data storage unit C, and a fourth output port corresponds to the data storage unit D.

The data output from one output port is configured to be stored into a corresponding data storage unit. For example, the data storage unit A is configured to store the following: data output from the first output port corresponding to the data storage unit A in the address decoding unit A, data output from a first output port corresponding to the data storage unit A in the address decoding unit B, data output from a first output port corresponding to the data storage unit A in the address decoding unit C, and data output from a first output port corresponding to the storage unit A in the address decoding unit D. Thus, data of each address decoding unit can be stored in any of the data storage units 241, thereby realizing the sharing among the data storage units 241.

One output port is used to output one data type. The four output ports of a same address decoding unit 242 correspond to different data types. For example, the first output port of each address decoding unit 242 is configured to output characteristic maps, and the second output port of each address decoding unit 242 is configured to output characteristic parameters.

Each address decoding unit 242 also includes three input ports, and the three input ports are respectively used to receive signals, data, and address information transmitted from external ports. Each address decoding unit 242 is configured to compile, according to the received signal, data, and address information, to form four data.

The number of the address decoding units 242 is consistent with the number of the external ports. For example, when the number of the external ports is four, the number of the address decoding units 242 is four correspondingly. Data transmitted from the external ports can be stored to any one of the data storage units 241 through the address decoding units 242, thereby realizing the resource sharing in the data storage module 240. The external ports may be ports of one or more processing units or may be ports of a data bus, any port that can store data into the data storage unit and read data from the data storage unit is within the protection scope of the embodiments of the present disclosure.

The data storage module 240 further includes at least two data merging units 243, e.g., four data merging units 243. Each data merging unit 243 includes at least two data input ports and one data output port. Each data merging unit 243 is configured to receive all data corresponding to one data storage unit 241 through the at least two data input ports, processes all the data, and is configured to store the processed data into corresponding data storage unit 241, thereby realizing that the data storage module 240 regularly processes the data, improving the efficiency of data processing, and avoiding the phenomenon of data storage chaos.

Each data merging unit 243 corresponds to one data storage unit 241. One data input port of each data merging unit 243 is coupled to output ports of all address decoding units 242 that correspond to one data storage unit 241, that is, each data merging unit 243 couples to all address decoding units 242. By using one data merging unit 243 to process data of a plurality of address decoding units 242, the efficiency of data storage is improved.

The data merging unit 243 is configured to adopt bitwise OR operations to count data, the bitwise OR operation is a binary operation. As long as one of corresponding two binary bits is 1, the result bit is 1. The bitwise OR operation logic has relatively simple logic and relatively fast operation speed, which can improve the processing efficiency of the data merging unit 243 and the storage efficiency of the data storage module 240 further more.

One data merging unit 243 corresponds to one data storage unit 241. For example, a data merging unit A corresponds to the data storage unit A, a data merging unit B corresponds to the data storage unit B. A piece of data, decoded and formed by the address decoding unit A, is transmitted to a data merging unit A corresponding to the data storage unit A to be processed, and the processed data can be transmitted to the data storage unit A and then stored therein, so that fast and efficient data storage by the data storage module 240 can be caused.

It can also be noted that, a second processing module 230 such as a scalar processing unit 232 may not acquire the data required to be processed from the data storage module 240, and the data required to be processed by the scalar processing unit 232 may be carried by one or more received instructions or transmitted by other manners.

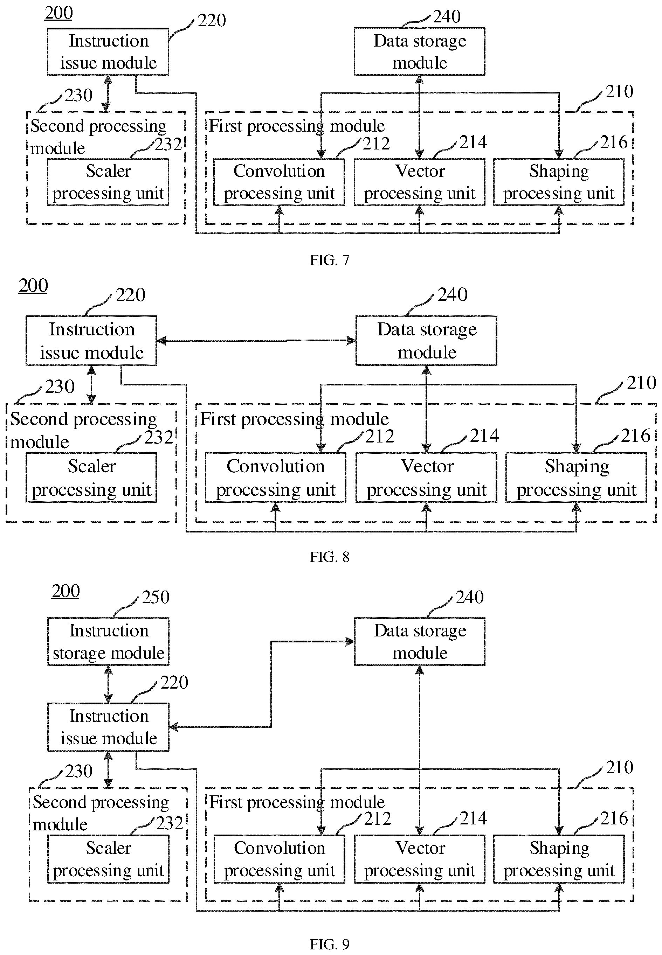

FIG. 7 illustrates a sixth structure of a neural network processor according to an embodiment of the present disclosure. A neural network processor illustrated in FIG. 7 is different form the neural network processor illustrated in FIG. 5 as follows. In FIG. 7, a second processing module 230 such as a scalar processing unit 232 is coupled to an instruction issue module 220 and not coupled to a data storage module 240. In FIG. 5, the second processing module 230 such as the scalar processing unit 232 is coupled to both of the instruction issue module 220 and the data storage module 240. In FIG. 7, the second processing module 230 such as the scalar processing unit 232 acquires the data required to be processed from its' received instruction, in other words, the data required to be processed by the second processing module 230 such as the scalar processing unit 232 in FIG. 7 is carried by one or more instructions issued by the instruction issue module 220. This embodiment may also provide a separate data storage module for the second processing module 230 such as the scalar processing unit 232.

It can be noted that the data storage module 240 may also be coupled to the instruction issue module 220, and the instruction issue module 220 is configured to determine whether to issue one or more instructions according to whether the data storage module 240 has data to-be-processed stored therein.

FIG. 8 illustrates a seventh structure of a neural network processor according to an embodiment of the present disclosure. An instruction distribution module 220 is coupled to a data storage module 240. The instruction issue module 220 can be configured to send an index to the data storage module 240, and the data storage module 240 is configured to return a signal according to the index sent by the instruction issue module 220. When the data storage module 240 has data to-be-processed stored therein, the data storage module 240 is configured to return to the instruction issue module 220 a signal, which indicates that has the data to-be-processed stored therein, such as "1". When the data storage module 240 has no data to-be-processed stored therein, the data storage module 240 is configured to return to the instruction issue module 220 a signal, which indicates that has no data to-be-processed stored therein, such as "0".

The instruction issue module 220 is configured to take different actions according to different return signals it is configured to receive. For example, when the instruction issue module 220 is configured to receive "1", the instruction issue module 220 is configured to determine that the data storage module 240 has the data to-be-processed stored therein, and then the instruction issue module 220 is configured to issue a plurality of instructions in parallel. When the instruction issue module 220 is configured to receive "0", the instruction issue module 220 is configured to determine that the data storage module 240 does not store the data to-be-processed, and the instruction issue module 220 does not be configured to issue instructions to the data storage module 240 at this time. Therefore, unnecessary instruction issue can be avoided and power consumption can be saved.

FIG. 9 illustrates an eighth structure of a neural network processor according to an embodiment of the present disclosure. A neural network processor 200 provided in the embodiment of the present disclosure further includes an instruction storage module 250, which may also be referred to as an instruction cache (ICache). The instruction storage module 250 may be configured to store some fine-grained instructions, such as calculation instructions and control instructions. In other words, the instruction storage module 250 is configured to store instructions of the neural network processor 200. It can be noted that the instruction storage module 250 can also store other instructions. The instruction storage module 250 is coupled to an instruction issue module 220, and the instruction storage module 250 can be configured to send its' stored instructions to the instruction issue module 220. In other words, the instruction issue module 220 can be configured to acquire a plurality of instructions from the instruction storage module 250.

Processes of the instruction issue module 220 is configured to acquire instructions from the instruction storage module 250 may be as follows. The instruction issue module 220 is configured to send an instruction fetch request to the instruction storage module 250, when an instruction corresponding to the instruction fetch request is found in the instruction storage module 250, that is referred to as Instruction Hit, the instruction storage module 250 is configured to send the instruction corresponding to the instruction fetch request to the instruction issue module 220 in response to the instruction fetch request. Otherwise, when the instruction corresponding to the instruction fetch request is not found in the instruction storage module 250, which is referred to as Instruction Miss, the instruction storage module 250 is configured to suspend/hold to response to the instruction fetch request, meanwhile, the instruction storage module 250 is configured to send an instruction acquiring request and is configured to wait the instruction to return to the instruction storage module 250, then the instruction storage module 250 is configured to send the instruction corresponding to the instruction fetch request to the instruction issue module 220 in response to the instruction fetch request.

Processes of the instruction issue module 220 is configured to acquire instructions from the instruction storage module 250 can be as follows. When the instruction storage module is configured to store instructions required by the instruction issue module 220 therein, the instruction issue module 220 may be configured to directly obtain the instructions from the instruction storage module 250. When at least one instruction required by the instruction issue module 220 is not in the instruction storage module 250, the instruction storage module 250 can be figured to read the at least one instruction required by the instruction issue module 220 from other locations, such as an external memory, and is configured to return the at least one instruction to the instruction issue module 220.

It can be noted that the instruction issue module 220 and the instruction storage module 250 in the embodiment of the present disclosure may be two separate parts. Of course, the instruction issue module 220 and the instruction storage module 250 may constitute an instruction preprocessing module, in other words, the instruction issue module 220 and the instruction storage module 250 may be two parts of the instruction preprocessing module.

It can also be noted that each instruction stored in the instruction storage module 250 has a corresponding type, and the instruction issue module 220 may be configured to issue a plurality of instructions based on the type of instruction. For example, the instruction issue module 220 is configured to issue one or more instructions of a first type to a convolution processing unit 212, and the instruction issue module 220 is configured to issue one or more instructions of a second type to a scalar processing unit 232. The type of instruction may be any one of, a jump instruction, a branch instruction, a convolution calculation instruction, a vector calculation instruction, a shaping calculation instruction and the like.

The instruction storage module 250 of the embodiment is not limited to store a part of instructions of the neural network processor 200. The instruction storage module 250 of the embodiment can also be configured to store all instructions of the neural network processor 200, and the instruction storage module 250 may be called an Instruction RAM (IRAM) or a program memory. Upper-level software such as an external processor can directly write one or more programs to the IRAM.

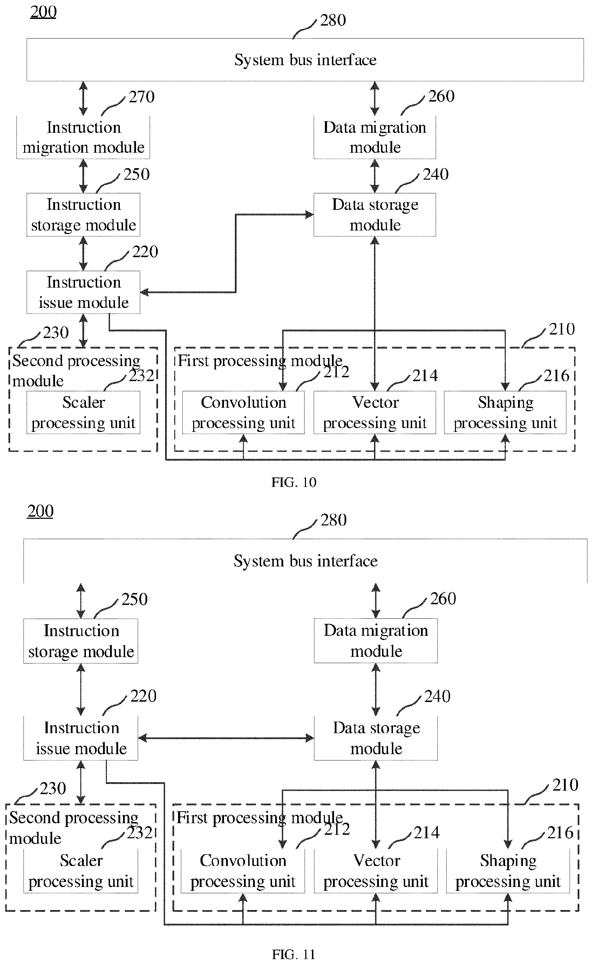

FIG. 10 illustrates a ninth structure of a neural network processor according to an embodiment of the present disclosure. A neural network processor 200 provided by this embodiment further includes a data migration module 260, an instruction migration module 270, and a system bus interface 280.

The system bus interface 280 is configured to be coupled to a system bus, which may be a system bus of an electronic device such as a smart phone. The system bus interface 280 is configured to be coupled to the system bus to cause data transmission with other processors and external memories. The system bus interface 280 can be configured to convert internal write/read requests into bus write/read requests that comply with a bus interface protocol, such as an advanced extensible interface (AXI) protocol.

The data migration module 260 is coupled to the system bus interface 280 and/or the data storage module 240. The data migration module 260 is configured to move data, it can move external data to the data storage module 240, it also can be configured to move data from the data storage module 240 to the external. For example, the data migration module 260 is configured to read data from the system bus through the system bus interface 280 and is configured to write the read data to the data storage module 240. The data migration module 260 may also be configured to transmit data or processing results stored in the data storage module 240 to the external memory. For example, the data migration module 260 is configured to transmit the processing results of every processing unit of a first processing module 210 to the external memory. That is, the data migration module 260 can implement data migration between the internals and the externals through the system bus interface 280.

The data migration module 260 may be a direct memory access (DMA), and the DMA can move data from one address space to another address space. The address space for data transfer can be an internal memory or a peripheral interface. Usually, a descriptor configured to control the data migration of the DMA data stored in a RAM in advance, and the descriptor includes information such as a source address space, a destination address space, a data length and the like. The DMA is initialized by one or more software and then the data starts to be moved. The process of data migration can be carried out independently from the neural network processor 200, thereby improving the efficiency of the neural network processor 200 and reducing the burden of the neural network processor 200.

The instruction migration module 270 is coupled to the system bus interface 280 and the instruction storage module 250. The instruction migration module 270 is configured to move instructions, in other words, the instruction migration module 270 is configured to read instructions so as to move external instructions to the instruction storage module 250. For example, the instruction migration module 270 is configured to read one or more instructions from the system bus through the system bus interface 280 and is configured to store the read instructions in the instruction storage module 250. When Instruction Miss is occurred in the instruction storage module 250, the instruction storage module 250 will be configured to request the instruction migration module 270 to send a read instruction request to the system bus interface 280 to read a corresponding instruction and is configured to store it in the instruction storage module 250. The instruction migration module 270 may also be a DMA. Of course, the instruction storage module 250 can also be configured to directly write all instructions to the instruction storage module 250 through the instruction migration module 270.

Therefore, the data migration module 260 and the instruction migration module 270 in this embodiment are two separate unit modules, and the data migration module 260 and the instruction migration module 270 implement the transfer or the migration of data and instructions, respectively. In other words, this embodiment of the present disclosure can dispose two DMAs to cause the movement of data and instructions. The data migration module 260 can include one or more logical channels, and the instruction migration module 270 can include one or more physical channels. Here, the instruction migration module 270 is taken as an example for description.

For example, the data migration module 260 may be a separate DMA, which is defined as DMA1 here; the instruction migration module 270 may be another separate DMA, which is defined as DMA2 here. That is, the DMA1 is configured to move data, and the DMA2 is configured to move instructions.

FIG. 11 illustrates a tenth structure of a neural network processor according to an embodiment of the present disclosure. FIG. 11 illustrates that an instruction storage module 250 is coupled to a system bus interface 280, thus an external memory can be configured to directly store one or more programs or instructions required by a neural network processor 200 to the instruction storage module 250.

It can be noted that when the instruction storage module 250 is an IRAM, the instruction storage module 250 can also be coupled to the external memory through other interfaces. In this way, it is convenient for the external memory to directly write instructions or programs into the instruction storage module 250, in other words, it is convenient for the initialization of instruction.

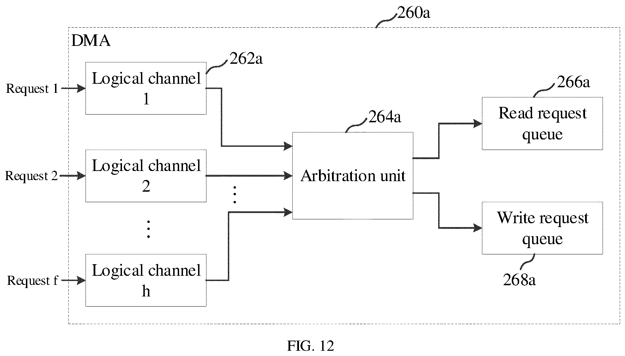

FIG. 12 illustrates a first structure of a DMA in a neural network processor according to an embodiment of the present disclosure. A DMA 260a illustrated in the FIG. 12, is equivalent to a partial structure of a data migration module 260. The DMA 260a includes a number of logical channels 262a and an arbitration unit 264a. The logical channels 262a each are coupled to the arbitration unit 264a, and the arbitration unit 264a can be coupled to a system bus through a system bus interface. It can be noted that the arbitration unit 264a may also be coupled to, through other interfaces, at least one of a peripheral device and a memory.

The number of the logical channels 262a may be h, where h is a natural number greater than 1, that is, there are at least two logical channels 262a. Each logical channel 262a can be configured to receive one or more data migration requests such as a request 1, a request 2, and a request f, and perform one or more data migration operations based on the one or more received data migration requests.

Each logical channel 262a of the DMA 260a can be configured to achieve functions such as generating, parsing, and controlling a descriptor, and details can be determined according to the composition of the request. When several logical channels 262a simultaneously receive their respective data migration request, the arbitration unit 264a can be configured to select one request, to enter into a read request queue 266a and a write request queue 268a, waiting for data migration.

The logic channel 262a needs software intervention. The software configures the descriptor or a register in advance, and completes initialization to move the data. All logical channels 262a of the DMA 260a are visible to the software and scheduled by the software. In some scenarios, for example, when an internal engine such as an instruction issue module (also referred to as an instruction preprocessing module) autonomously transferring data without software scheduling, the logical channel 262a of this type of DMA260a cannot be used. Thus, it is inconvenient to flexibly transplant according to business needs, and relies too much on the software scheduling.

Based on this, the disclosure also provides a DMA to achieve different movement requirements.

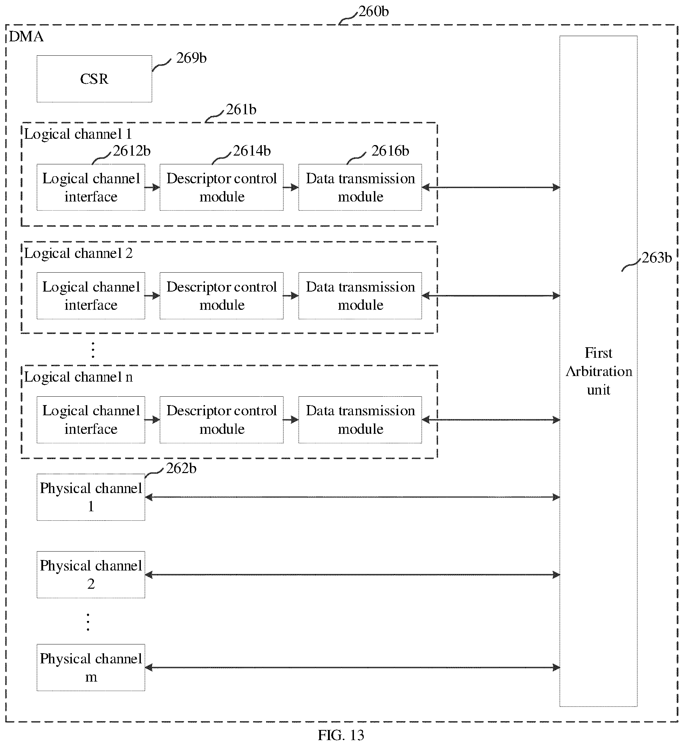

FIG. 13 illustrates a second structure of a DMA in a neural network processor according to an embodiment of the present disclosure. A DMA 260b illustrated in FIG. 13 is functionally equivalent to an instruction migration module 270 and a data migration module 260, in other words, the DMA 260b illustrated in FIG. 13 combines the functions of the instruction migration module 270 and the data migration module 260. The DMA 260b may include at least one logical channel 261b and at least one physical channel 262b. The at least one logical channel 261b and the at least one physical channel 262b are parallel, which can also be understood as that the at least one logical channel 261b and the at least one physical channel 262b are coupled to a same interface. Thus, the at least one physical channel 262b and the at least one logical channel 261b can transfer instructions and data in parallel. Since the instruction migration through the physical channel 262b is automatically requested by an internal engine such an instruction issue module, it does not need to be scheduled by upper-level software, thereby reducing the dependency of the entire DMA 260b on software scheduling, making it more convenient to move data, and improving the flexibility of the data migration according to business requirements. It is understood that, this embodiment just uses one DMA260b to cause the migration of instructions and data, so the number of unit modules can be reduced.

The logical channel 261b can be configured to perform the data migration in response to a migration request scheduled by the upper-layer software. The upper-layer software may be a programmable unit, such as a central processing unit (CPU).

The number of the at least one logical channel 261b can be n, where n is a natural number greater than or equal to 1. For example, the number of the at least one logical channel 261b is one, two, three, etc. It can be noted that the actual number of the at least one logical channels 261b can be set according to actual product requirements.

The physical channel 262b can be configured to perform the data migration in response to a migration request from an internal engine, and the internal engine can be an instruction issue module (also referred to as an instruction preprocessing module) of a neural network processor.

The number of the at least one physical channel 262b may be m, where m is a natural number greater than or equal to 1. For example, the number of the at least one physical channels 262b is one, two, three, etc. It can be noted that the actual number of the at least one physical channel 262b can be set according to actual product requirements. In some embodiments, the number of the at least one logical channels 261b may be two, and the number of the at least one physical channels 262b may be one.

As illustrated in FIG. 13, the DMA 260b further includes a first arbitration unit 263b, and the first arbitration unit 263b is coupled to the system bus interface.

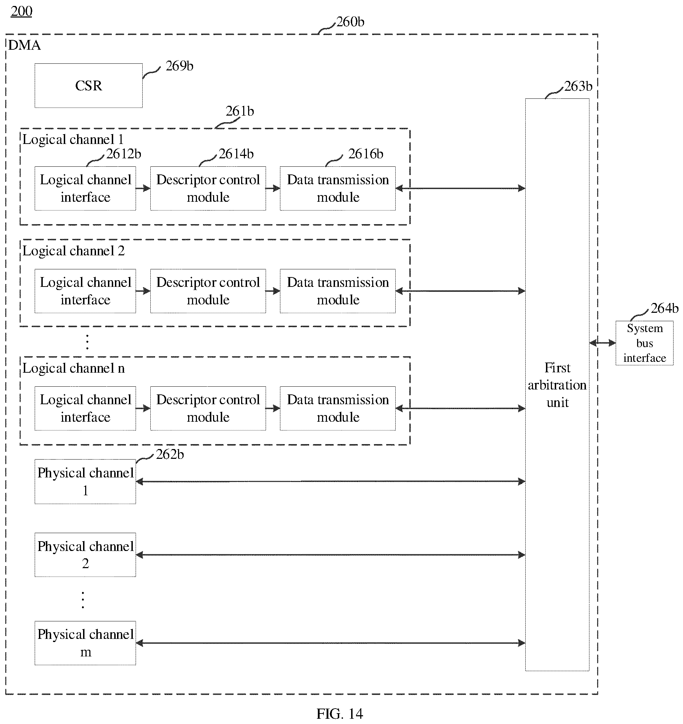

FIG. 14 illustrates an eleventh structure of a neural network processor provided by an embodiment of the present disclosure. A first arbitration unit 263b is coupled to a system bus interface 264b. It can be understood that the system bus interface 264b may be equivalent to a system bus interface 280. The first arbitration unit 263b is coupled to a system bus through the system bus interface 264b. The first arbitration unit 263b is further coupled to all of at least one physical channel 262b and all of at least one logical channel 261b, so that the at least one logical channel 261b and the at least one physical channel 262b can be configured to transfer data and instruction from the system bus. When several channels simultaneously initiate their respective read/write request, the first arbitration unit 263b can be configured to arbitrate to determine which one read/write request can be sent to the system bus interface 264b. For example, when one logical channel 261b and one physical channel 262b are configured to simultaneously initiate a read/write request, the first arbitration unit 263b can be configured to determine the read/write request of the physical channel 262b be sent to the system bus interface 264b, or the first arbitration unit 263b can be configured to determine the read/write request of the logical channel 261b be sent to the system bus interface 264b.

The system bus interface 264b can be disposed outside the DMA 260b. It can be noted that the system bus interface 264b may also be provided in the DMB 260b, that is, the system bus interface 264b may be a part of the DMA 260b.

In some embodiments, the first arbitration unit 263b can be configured to reallocate the bandwidth of the at least one physical channel 262b and the at least one logical channel 261b.

In some embodiments, the logical channel 261b may include a logical channel interface 2612b, a descriptor control module 2614b, and a data transmission module 2616b. The logical channel interface 2612b can be coupled to a data storage module such as the data storage module 240 shown in FIG. 5. The logical channel interface 2612b, the descriptor control module 2614b, and the data transmission module 2616b are coupled in sequence. The data transmission module 2616b is further coupled to the first arbitration unit 263b, so the data transmission module 2616b is coupled to the system bus through the system bus interface 264b.

The logical channel interface 2612b can be determined by the format of one or more commands issued by the upper-layer software, and the logical channel interface 2612b can contain an address of a descriptor. The descriptor control module 2614b indexes the descriptor according to the one or more commands issued by the upper-layer software, analyzes data information such as a source address, a destination address, a data length and the like, and initiates a read and write data command to the data transmission module 2616b of the DMA 260b. The data transmission module 2616b is configured to receive the read and write data command from an upper layer (i.e., the descriptor control module 2614b), converts the read and write data command into one or more required signals which may be signals read first and write later, completes data migration, and is configured to return a response to the descriptor control module 2614b.

Specific processes for the logical channel 261b transferring data are as follows.

A control status register (CSR) 269b of the DMA 260b is configured. It can be noted that the DMA260b transferring data can clarify the following conditions: where the data is transferred from (i.e., the source address), where the data is transferred to (i.e., the destination address), and when the data is transferred (i.e., a trigger source, also referred to as a trigger signal). It is necessary to complete the configuration of various parameters and conditions of the DMA260b to cause the data migration. The source address, the destination address and the trigger source can be set by the upper-level software.

In practical disclosures, the various parameters and the conditions of the DMA260b can be defined in the CSR 269b, in other words, configuration information and parameters of the DMA260b, such as a working mode, arbitration priorities, interface information, and the like can be set in the CSR 269b. In some embodiments, as an example, the CSR 269b configures an address of a peripheral register, an address of a data memory, an amount of data required to be transmitted, priorities between each channel, directions of data transmission, a cycle mode, an incremental mode of the peripheral and the memory, a data width of the peripheral and the memory, etc.

The upper-layer software is configured to issue a data migration command to the logical channel interface 261b of the DMA260b, specifically to the logical channel interface 2612b. In the other words, the upper-layer software is configured to issue a data migration request to the logical channel interface 2612b of the logical channel 261b of the DMA260b. When the programmable unit is configured to issue the data migration command to the logical channel 261b of the DMA260b, it is configured to carry an address of the descriptor, or it is configured to directly carries the descriptor. The descriptor or the address of the descriptor is transmitted to the descriptor control module 2614b through the logical channel interface 2612b.

If the descriptor control unit 2614b is configured to receive the address of the descriptor, the descriptor control unit 2614b is configured to read the descriptor according to the address of the descriptor. That is, the descriptor control unit 2614b indexes the descriptor. Then the descriptor is parsed, that is, information required for data migration is generated, such as a data source address space, a destination address space, the data length, etc. If the descriptor control unit 2614b is configured to receive a descriptor, the descriptor control unit 2614b directly parses the descriptor.

After the descriptor control unit 2614b parses the descriptor, the data transmission module 2616b can convert, following a principle of read first and write later, the generated information caused by the descriptor control unit 2614b parsing the descriptor into signals that the system bus interface 264b can be transmitted, and the signals are transmitted to the first arbitration unit 263b.

When the first arbitration unit 263b is configured to receive a plurality of read/write requests simultaneously initiated by a plurality of logical channels 261b, it can arbitrate and determine one to be sent to the system bus interface 264b.

When the first arbitration unit 263b is configured to simultaneously receive a read/write request initiated from the logical channel 261b and a read/write request initiated from the physical channel 262b, the first arbitration unit 263b can also be configured to arbitrate and determine one to be sent to the system bus interface 264b, and the one is transmitted to the system bus through the system bus interface 264b.

After the read/write request of the DMA260b is transmitted to the system bus, the system bus completes a read and write command, the data in the source address space is written into the destination address space, thereby completing the data migration.

The physical channel 262b may be coupled to an internal engine such as an instruction issue module through an interface, and the interface may include configurations and parameters for instruction migration. Of course, the configurations and parameters of the physical channel 262b for instruction migration can also be configured by the CSR 269b.

It can be noted that the DMA260b can also be coupled to other components through other structures to cause the data migration.

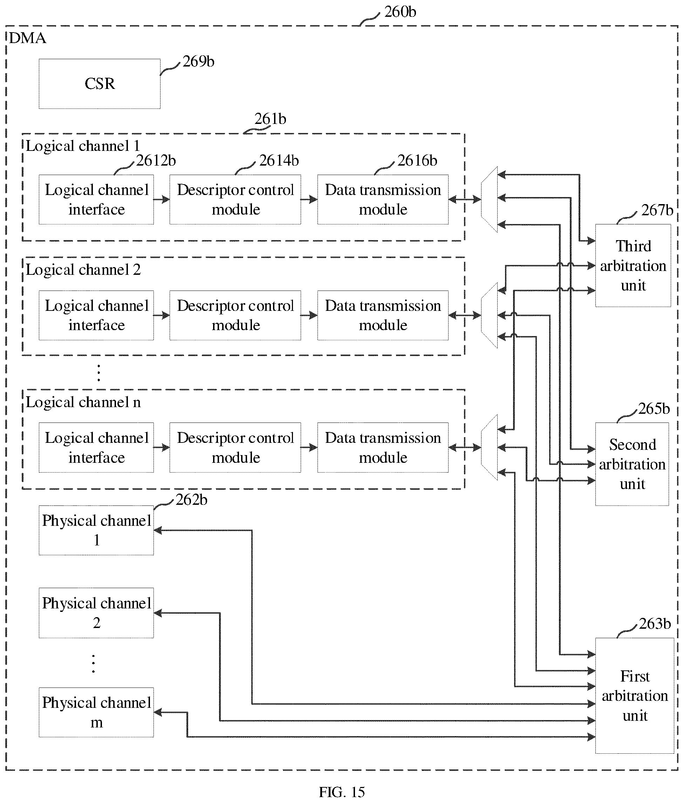

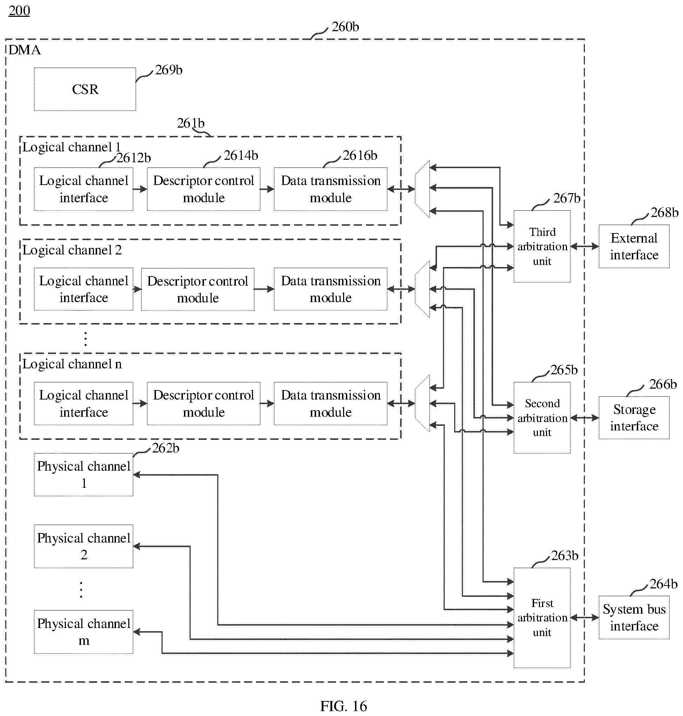

Please refer to FIGS. 15 and 16, FIG. 15 illustrates a third structure of a DMA in a neural network processor according to an embodiment of the present disclosure, and FIG. 16 illustrates a twelfth structure of a neural network processor provided by an embodiment of the present disclosure. A DMA 260b further includes a second arbitration unit 265b coupled to a storage interface 266b. The storage interface 266b may be coupled to a storage module (e.g., a memory, or a BUF). The storage module and the DMA260b may or may not be located in a same neural network processor. For example, the DMA260b is located in the neural network processor, the storage module may be located in the neural network processor or other devices. The second arbitration unit 265b can be coupled to each logical channel 261b. When the first arbitration unit 263b and the second arbitration unit 265b are coupled to a same logical channel 261b, they can be coupled to said logical channel 261b through a selector. The storage interface 266b can be provided outside the DMA260b or in the DMA260b.

Please continue to refer to FIGS. 15 and 16, the DMA260b may also include a third arbitration unit 267b coupled to a peripheral interface 268b. The peripheral interface 268b can be coupled to an external device. The external device and the DMA 260b are located in different devices. For example, the DMA260b is located in the neural network processor, and the external device is a CPU. The third arbitration unit 267b can be coupled to each logical channel 261b. When the first arbitration unit 263b and the third arbitration unit 267b are coupled to the same logical channel 261b, they can be coupled to said logical unit 261b through a selector. The peripheral interface 268b may be provided outside the DMA260b or inside the DMA260b.

Please still refer to FIGS. 15 and 16, the DMA260b of the embodiments of the present disclosure may include the first arbitration unit 263b, the second arbitration unit 265b, and the third arbitration unit 267b at the same time. The first arbitration unit 263b is coupled to the system bus interface 264b, the second arbitration unit 265b is coupled to the storage interface 266b, and the third arbitration unit 267b is coupled to the peripheral interface 268b. The first arbitration unit 263b, the second arbitration unit 265b, and the third arbitration unit 267b each are coupled to the logical channel 261b. When the first arbitration unit 263b, the second arbitration unit 265b and the third arbitration unit 267b are coupled to a same logical channel 261b, a selector may be coupled to the logical channel 261b and/or the three arbitration units.

It can be noted that the embodiments of the present disclosure can provide other arbitration units to couple to other components through other interfaces.

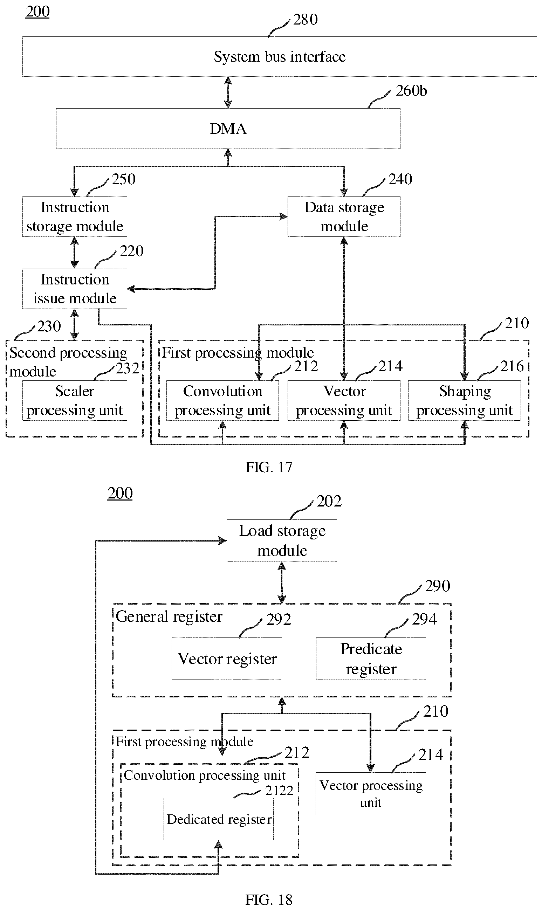

FIG. 17 illustrates a thirteenth structure of a neural network processor according to an embodiment of the present disclosure. FIG. 17 illustrates a relationship between the DMA 260b shown in FIG. 13 or FIG. 15 and other elements of a neural network processor 200. The DMA 260b is coupled to a system bus interface 280, an instruction storage module 250, and a data storage module 240. The at least one physical channel 262b can be coupled to the instruction storage module 250. The at least one logical channel 261b can be coupled to the data storage module 240. The DMA 260b can be configured to move data to the data storage module 240 through the system bus interface 280, can be configured to move instructions to the instruction storage module 250 through the system bus interface 280, and can also be configured to move data stored in the data storage module 240 to an external memory through the system bus interface 280.

In the embodiment, data of a first processing module 210 in the neural network processor 200 can be directly stored in the data storage module 240, and data of the data storage module 240 can also be loaded into the first processing module 210, thereby simplifying the program. However, in order to speed up a data access speed, the embodiments of the present disclosure may also add one or more general register between the data storage module 240 and the first processing module 210. The neural network processor having one or more general registers is described in detail below with reference to the drawings.

FIG. 18 illustrates a fourteenth structure of a neural network processor according to an embodiment of the present disclosure. A neural network processor 200 may include a general register 290 and a load storage module 202.

The general register 290 is coupled to a first processing module 210, and the general register 290 can be coupled to all processing units of the first processing module 210. For example, the general register 290 is coupled to a convolution processing unit 212 and a vector processing unit 214 of the first processing module 210. Both the convolution processing unit 212 and the vector processing unit 214 can be configured to obtain required data from the general register 290. Of course, both the convolution processing unit 212 and the vector processing unit 214 can also be configured to store their respective processing result into the general register 290. It can be noted that the number of the processing units included in the first processing module 210 is not limited to the number of processing units as shown in FIG. 17. For example, the first processing module 210 may further include a shaping processing unit.

The general register 290 may include a plurality of registers. For example, the general register 290 includes a plurality of vector registers 292. For another example, the general register 290 includes a plurality of prediction registers 294. For still another example, the general register 290 includes the plurality of vector registers 292 and the plurality of prediction registers 294. The plurality of vector registers 292 may be referred to as a vector register file (VRF). The plurality of prediction registers 294 may be referred to as a prediction register file (PRF). The prediction register may also be referred to as a predicate register. The type and the number of registers included in the general register 290 can be set according to actual requirements, to improve the flexibility of software programming.

The convolution processing unit 212 may have one or more dedicated registers 2122 that can store data therein. For example, there are two dedicated registers 2122 for the convolution processing unit 212, namely a first dedicated register and a second dedicated register, wherein the first dedicated register is configured to store image data, and the second dedicated register is configured to store weights.

A load store module (LSU) 202 is coupled to the general register 290. The load store module 202 can load data into the general register 290, so that each processing unit of the first processing module 210 can be configured to obtain data from the general register 290. The load storage module 202 can also be coupled to the dedicated registers 2122 of the convolution processing unit 212. The load storage module 202 can be configured to directly load data into the dedicated registers 2122 of the convolution processing unit 212, so that the convolution processing unit 212 can be configured to perform processing such as convolution processing on the data, thereby increasing a data loading speed.

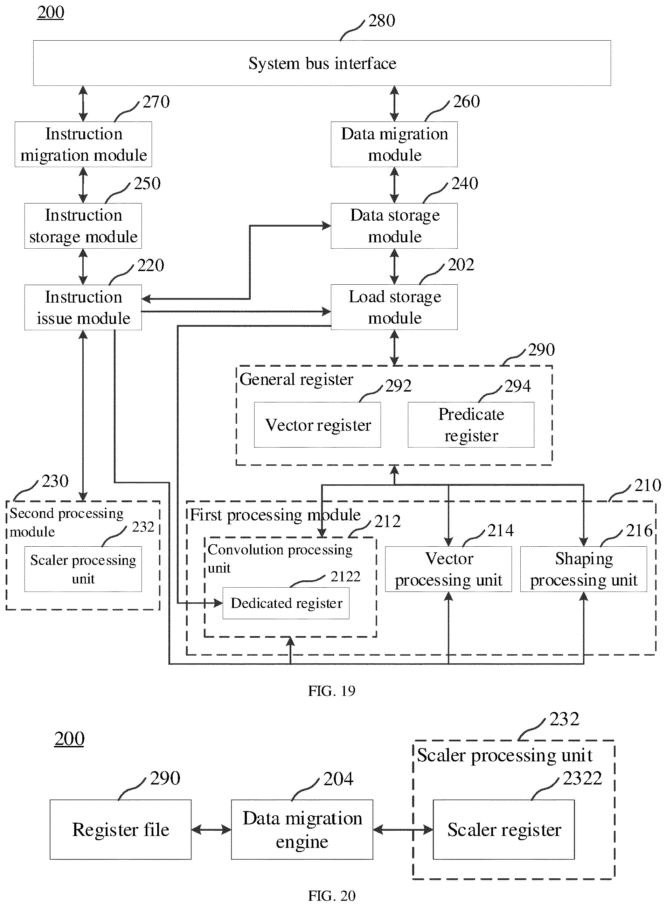

It can be noted that FIG. 18 only shows a part of the components of the neural network processor 200, and other components of the neural network processor 200 can be referred to in FIGS. 1 to 17. In order to describe in detail a relationship of the load storage module 202, the general register 290, and other components of the neural network processor 200, the following description will be made in detail with reference to FIG. 19.

FIG. 19 illustrates a fifteenth structure of a neural network processor according to an embodiment of the present disclosure. A load storage module (LSU) 202 is coupled to both a general register 290 and a data storage module 240. The load storage module 202 can be configured to load data of the data storage module 240 into the general register 290. Processing units of a first processing module 210, such as a convolution processing unit 212, a vector processing unit 214, and a shaping processing unit 216, can be configured to load data required to be processed from the general register 290 according to their respective instructions. The general register 290 may be coupled to a plurality of processing units, for example, the general register 290 is coupled to the convolution processing unit 212, at least one of the vector processing unit 214 and the shaping processing unit 216. Therefore, the convolution processing unit 212, the vector processing unit 214, and the shaping processing unit 216 each can be configured to obtain the data required to be processed from the general register 290.

The convolution processing unit 212, the vector processing unit 214, and the shaping processing unit 216 each can also be configured to store their respective processing results into the general register 290. Furthermore, the load storage module 202 can be configured to store the processing results in the general register 290 to the data storage module 240, and the data storage module 240 can be configured to transmit the processing results to an external memory through a DMA or a data migration module 260.

It can be noted that, a second processing module 230 such as a scalar processing unit 232 in the embodiment is not coupled to the general register 290. As described above, data required to be processed by the scalar processing unit 232 in the embodiment can be carried by a received instruction. The scalar processing unit 232 in the embodiment may also be coupled to the data storage module 240 to obtain the data required to be processed from the data storage module 240.

The load storage module 202 of the embodiment can not only be configured to store the data of the data storage module 240 in the general register 290, but can also be configured to load the data to other locations. For example, the load storage module 202 is further directly coupled to the convolution processing unit 212, which can be understood that there is no general register 290 coupled to both the load storage module 202 and the convolution processing unit 212 as described above. The load storage module 202 being coupled to the convolution processing unit 212 can be understood that the load storage module 202 is coupled to one or more dedicated registers 2122 of the convolution processing unit 212, for example, the load storage module 202 is coupled to one of the dedicated registers 2122 of the convolution processing unit 212, and the load storage module 202 can be configured to directly load data of the data storage module 240, such as weights, to said one of the registers 2122 of the convolution processing unit 212. It is understandable that the load storage module 202 can also be configured to directly load other data such as image data to said one of the dedicated registers 2122 of the convolution processing unit 212.

Therefore, the load storage module 202 of the embodiment can be configured to directly load the data of the data storage module 240 to the convolution processing unit 212, and the load storage module 202 can also be configured to store the data of the data storage module 240 into the general register 290, so that the processing units of the first processing module 210, such as the convolution processing unit 212, may be configured to obtain corresponding data from the general register 290 based on their respective received instructions. For example, the load storage module 202 can be configured to directly load first data to the convolution processing unit 212, the load storage module 202 can be configured to store second data into the general register 290, and the convolution processing unit 212 can be configured to obtain the second data from the general register 290. The type of the first data and the second data may be different, for example, the first data can be weights and the second data can be image data. Therefore, the convolution processing unit 212 of the embodiment can be configured to receive the data required to be processed from different channels. Compared with the convolution processing unit 212 receiving the data required to be processed from the same channel, the embodiment improves a data loading speed, thereby improving an operation rate of the neural network processor 200. Moreover, the embodiment can also simplify an instruction set and make it easy to implement. Meanwhile, the embodiment is convenient for optimizing a compiler.

It can be noted that, after the load storage module 202 directly loads the first data into the convolution processing unit 212 and loads the second data into the general register 290, another processing unit of the first processing module 210 such as the vector processing unit 214, may also be used to obtain the second data from the general register 290.

It can also be noted that, the load storage module 202 can also be configured to load other data such as third data to the general register 290. One or more processing units of the first processing module 210, such as the shaping processing unit 216, can be configured to obtain the third data form the general register 290. The type of the third data may be different from that of the first data and the second data.

The load storage module 202 is also coupled to an instruction issue module 220. The load storage module 202 can be configured to receive one or more instructions issued by the instruction issue module 220. The load storage module 202 can be configured to store, according to the instructions issued by the instruction issue module 240, the data of the data storage module 240 into the general register 290 and/or load the data of the data storage module 240 to the convolution processing unit 212. The load storage module 202 can also be configured to store, according to the instruction issued by the instruction issue module 240, the processing result, stored in the general register 290, to the data storage module 240. The processing result is, for example, from the vector processing unit 214.

It can be noted that the instruction issue module 220 can be configured to issue, in parallel, a number of instructions to the first processing module 210, the second processing module 230, and the load storage module 202 within one clock cycle. For example, the instruction issue module 220 can be configured to multi-issue instructions to the scalar processing unit 232, the convolution processing unit 212, the vector processing unit 214, and the load storage module 202 in parallel within one clock cycle.

The load storage module 202 and the data storage module 240 can be integrated together, and serve as two parts of one module. Of course, the load storage module 202 and the data storage module 240 may also be provided separately, in other words, the load storage module 202 and the data storage module 240 are not integrated in one module.

FIG. 20 illustrates a sixteenth structure of a neural network processor according to an embodiment of the present disclosure. A neural network processor 200 further includes a data migration engine 204. The data migration engine 204 may also be referred to as a register file data movement engine (MOVE). The data migration engine 204 can be configured to cause data migration between different registers, so that one or more processing units of a first processing module 210, such as a convolution processing unit 212, and one or more processing units of a second processing module 230, such as a scalar processing unit 232, obtain data required to be processed from the internals of the neural network processor 200. The obtained data is processed so that the data does not need to be transmitted to the externals of the neural network processor 200, processed by upper-layer software, and then returned to the neural network processor 200. In other words, the data migration engine 204 can be configured to cause data interaction between different registers (e.g., between the scalar processing unit and the general register, the scalar registers and the vector registers, the scalar registers and the prediction registers), thereby saving some processes of transmitting data from the neural network processor 200 to the externals, reducing interactions between the neural network processor 200 and upper-layer software such as the CPU, and improving data processing efficiency of the neural network processor 200. Meanwhile, the workload of the external CPU can also be reduced.

The neural network processor can cause data interaction between the scalar processing unit and the general register through the data migration engine. For instance, move the data of the scalar processing unit to the general register and move the data of the general register to the scalar processing unit. Therefore, some operations originally required by the upper-level software based on the intermediate processing results can be completed by the scalar processing unit or other processing units inside the neural network processor, which reduces the interaction with the upper-level software and improves the efficiency of the neural network processor in processing data.

The data migration engine 204 is coupled to a general register 290 and/or the scalar processing unit 232 of the second processing module 230. Details for the scalar processing unit 232 can be referred to the above description and are not repeated here again. The scalar processing unit 232 includes a plurality of scalar registers 2322, which are referred to as a scalar register file. The scalar processing unit 232 is coupled to the data migration engine 204 through the scalar registers 2322. The general register 290 has a plurality of registers, which are referred to as a register file. The general register 290 is coupled to the data migration engine 204 through the register file therein. It can be noted that the plurality of registers of the general register 290 can all be coupled to the data migration engine 204. It can be noted that not all but just some of the plurality of registers of the general register 290 are coupled to the data migration engine 204.

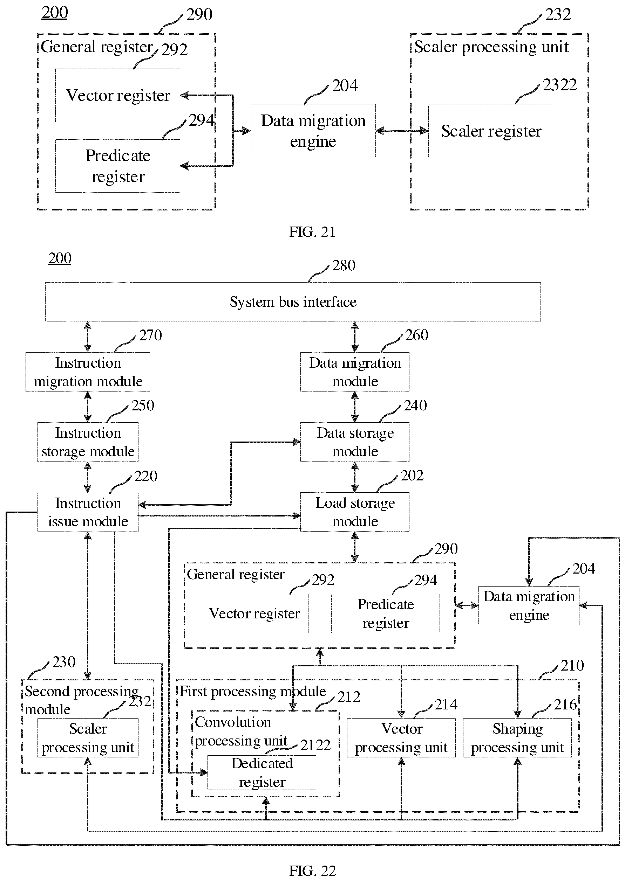

FIG. 21 illustrates a seventeenth structure of a neural network processor according to an embodiment of the present disclosure. A general register 290 included in a neural network processor 200 may include a plurality of vector registers 292, which are referred to as a vector register file. The plurality of vector registers 292 of the embodiment may be all coupled to a data migration engine 204. Just a part of the plurality of vector registers 292 may also be coupled to the data migration engine 204. The part of the plurality of vector registers 292, can be understood as at least one of the vector registers 292 but not all vector registers 292.

The general register 290 included in the neural network processor 200 may include a plurality of prediction registers 294, which are referred to as a prediction register file or a predicate register file. In the embodiment, the plurality of prediction registers 294 all may be coupled to the data migration engine 204, or just some but not all of the plurality of prediction registers 294 are coupled to the data migration engine 204.

It can be noted that when the general register 290 includes a plurality of types of registers, the general register 290 can be coupled to the data migration engine 204 through all types of registers or some types of registers. For example, when the general register 290 of the neural network processor 200 includes the plurality of vector registers 292 and the plurality of prediction registers 294, the general register 290 is coupled to the data migration engine 204 just through the plurality of vector registers 292.

It can be noted that FIG. 20 and FIG. 21 only show some components of the neural network processor 200, and the other components of the neural network processor 200 can be referred to FIGS. 1-19. In order to describe a relationship between the data migration engine 204 and other components and specific processes of realizing data migration for the data migration engine 204, details are described below with reference to FIG. 22.

FIG. 22 illustrates an eighteenth structure of a neural network processor according to an embodiment of the present disclosure. In the embodiment, when some data of a neural network processor 200, such as data required to be processed by a convolution processing unit 212, a vector processing unit 214, or a shaping processing unit 216 included in a first processing module 210, can be configured to perform scalar calculations, the data can be stored in a general register 290, a data migration engine 204 can be configured to move the data to a scalar processing unit 232, and the scalar processing unit 232 is configured to perform scalar calculations on the data. When the scalar processing unit 232 is configured to complete the calculations on the data and is configured to obtain a calculation result, the data migration engine 204 can be configured to move the calculation result to the general register 290, and a corresponding processing unit included in the first processing module 210 can be configured to obtain the calculation result from the general register 290. As such, in the embodiment, the data migration is occurred inside the neural network processor 200. Compared with that the neural network processor 200 is configured to transmit data to the external, the data is processed by external upper-layer software such as the CPU, and then the processed data is returned to the neural network processor 200, this embodiment can reduce interactions between the neural network processor 200 and the external, and improves the efficiency of the neural network processor 200 processing data.

Data processed by the convolution processing unit 212, the vector processing unit 214, or the shaping processing unit 216 of the first processing module 210 is configured to require scalar calculations. For example, an intermediate result processed by the convolution processing unit 212, the vector processing unit 214, or the shaping processing unit 216 of the first processing module 210 needs a judgment operation. The judgment operation can be completed by the scalar processing unit 232. In other words, the data stored in the general register 290 is data to be judged. The data to be judged needs the judgment operation. The data migration engine 204 is configured to move the data to be judged to the scalar register 2322 of the scalar processing unit 232 for the judgment operation.

In the embodiment, when some data of the neural network processor 200, such as scalar data of the scalar processing unit 232, can be transformed into vector data, the data migration engine 204 can be configured to move the scalar data (e.g., stored in at least one of the scalar registers 2322) to the general register 290, and a corresponding processing unit of the first processing module 210, such as the vector processing unit 214, may be configured to obtain the scalar data from the general register 290 to transform it into the vector data. It can be noted that scalar data can be transformed into the vector data, which can also be considered that the scalar data can be expanded into the vector data. For example, a 32-bit data is copied and 16 copies of the 32-bit data form a 512-bit vector.

In practical disclosures, an instruction issue module 220 is coupled to the data migration engine 204, the instruction issue module 220 can be configured to issue one or more instructions to the data migration engine 204, and the data migration engine 204 can be configured to perform one or more data movement operations according to the one or more instructions that it is configured to receive. For example, the instruction issue module 220 is configured to issue a first instruction to the data migration engine 204, and the data migration engine 204 is configured to move the data of the general register 290 to the scalar register 2322 of the scalar processing unit 232 according to the first instruction. For another example, the instruction issue module 220 is configured to issue a second instruction to the data migration engine 204, and the data migration engine 204 is configured to move the data of the scalar register 2322 to the general register 290 according to the second instruction.

It can be noted that the instruction issue module 220 can be configured to issue a plurality of instructions to the first processing module 210, a second processing module 230, a load storage module 202, and the data migration engine 204 in parallel within one clock cycle. For example, the instruction issue module 220 can be configured to issue a plurality of instructions to the convolution processing unit 212, the vector processing unit 214, the scalar processing unit 232, the load storage module 202, and the data migration engine 204 in parallel within one clock cycle.

The neural network processor 200 can be configured to perform convolutional neural network operations, cyclic neural network operations, and the like. The following takes convolutional neural network operations as an example. The neural network processor 200 is configured to obtain data to-be-processed (e.g., image data) from the external, and the convolution processing unit 212 in the neural network processor 200 may be configured to perform convolution processing on the data to-be-processed. The input of a convolutional layer in a convolutional neural network includes input data (e.g., the data to-be-processed which is obtained for the external) and weight data. Main calculation processes of the convolutional layer are performing convolution operations on the input data and weight data to obtain output data, wherein a main body of performing the convolution operations is the convolution processing unit. It can also be understood as that, the convolution processing unit of the neural network processor is configured to perform the convolution operations on the input data and the weight data to obtain the output data. It can be noted that the weight data can be understood as one or more convolution kernels in some cases. The convolution operations are described in detail below.

The size of the input data is H×W×C1, and the size of the weight data is K×R×S×C2, where H is the height of the input data, W is the width of the input data, C1 is the depth of the input data, K is the output number of the weight data, i.e., K is the number of the convolution kernels, R is the height of the weight data, i.e., R is the height of the convolution kernel, S is the width of the weight data, i.e., S is the width of the convolution kernel, and C2 is the depth of the weight data, i.e., C2 is the depth of the convolution kernel. C2 is equal to C1, because C2 and C1 are corresponding depth values and are equal. To facilitate understanding, C2 and C1 are both replaced by C below, which can also be understood as C2=C 1=C. The input data size can also be represented as N×H×W×C, where N is the number of batches of the input data.

The convolution processing unit first is configured to perform a window processing on the input data according to the size of the convolution kernel, and an Multiply Accumulate (MAC) operation is performed on an obtained window and one convolution kernel of the weight data to obtain a piece of data, then the window slides along a W direction and an H direction respectively, and MAC operations are performed on the window to obtain H'×W' pieces of data, and finally the K convolution kernels are traversed to obtain K×H'×W' pieces of data.

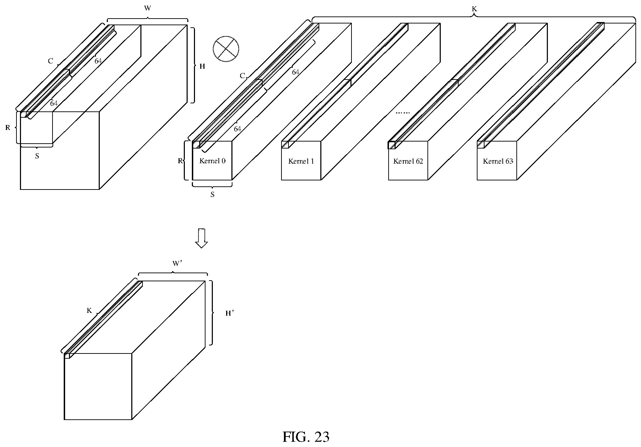

Of course, the convolution processing unit may also adopt other convolution operation manners. Another convolution operation manner is described in detail below. Please refer to FIG. 23, which is a schematic diagram showing convolution operations of a convolution processing unit in a neural network processor according to an embodiment of the present disclosure. The input data size is still represented as H×W×C, and the weight data (one or more convolution kernels) is still represented as K×R×S×C. Of course, the input data size can also be represented as N×H×W×C, where N is the number of batches of the input data.

The convolution processing unit first is configured to perform a window processing on the input data according to the size of the convolution kernel, MAC operations are performed on a first window obtained after the window processing and all convolution kernels of the weight data to obtain K pieces of data, then the first window slides respectively in the W direction and the H direction and MAC operations are performed to obtain H'×W'×K pieces of data. The specific operations are as follows (that is, specific operations of the convolution processing unit performing convolution operations are as follows).

Operation 1, a window processing is performed, according to the size of the convolution kernel (R×S), on the input data from a start point (W=0, H=0), so as to obtain the first window area (R×S×C).

Operation 2, MAC operations are performed on the first window and each K convolution kernel, so as to obtain K pieces of data.

Operation 3, the first window slides a first stride along the W direction, to obtain a new first window, wherein the size of the first window remains unchanged, and the first stride can be set as required.

Operation 4, the above operations 2 and 3 are repeated in sequence until reaching the boundary in the W direction, thus obtaining W'×K pieces of data, where W'=(W-S)/the first stride +1. For example, if W=7, S=3, and the first stride=2, then W'=3. For another example, if W=7, S=3, and the first stride =1, then W'=5.

Operation 5, back to the start point in the W direction, the first window slides a second stride along the H direction, to obtain a new first window, wherein the size of the first window remains unchanged, and the second stride can be set as required. For example, after the first window sliding the second stride in the H direction (assuming the second sliding operation length in the H direction is 1), the coordinates are (W=0, H=1).

Operation 6, the above operations 2-5 are repeated until reaching the boundary in the H direction, thus obtaining H'×W'×K pieces of data. It can be noted that every time the window slides in the W direction until reaching the boundary of the W direction, but after the last time the window slides in the H direction until reaching the boundary, the window further slides in the W direction until reaching the boundary of the W direction (that is, the above operations 2-4 are repeated).

The convolution operation unit includes a MAC Array for convolution operation. The size of the MAC array (L×M) is fixed, where L is the length of the MAC operation, and M is the number of units performing MAC operations in parallel. It can also be understood as M MAC operations of length L can be performed per cycle. Operations of assigning the MAC operations (i.e., the above operation 2) in the above convolution operation processes to the convolution operation unit for parallel operations are as follows (which can also be understood that specific operations of the convolution processing unit performing MAC operations using the MAC array are as follows).

Operation 1, at the HW plane, a window processing is performed, according to the size of the convolution kernel (R×S), on the input data from a start point (W=0, H=0), so as to obtain the first window area. In the depth direction, the first window is divided into C/L data segments of a length L. It can be noted that, the first window can be obtained first, and then the first window can be divided into C/L data segments of the length L later; or, the input data can be divided into C/L data segments of the length L first, and then the first window is obtained later, wherein the first window includes the C/L data segments of the length L. It can be understood as the first window may include first depth data of C/L layers along the depth direction.

Operation 2, in the depth direction, the convolution kernel is divided into C/L data segments of the length L, and this operation is performed on each K convolution kernel included in the weight data, so K groups of weight data are obtained and each group has C/L weight data segments. It can be understood that each convolution kernel includes C/L pieces of weight data segments of length L along the depth direction. In an alternative way, the K convolution kernels can be divided into K/M convolution kernel groups, each convolution kernel group includes the weight data of M convolution kernels.

Operation 3, first depth data of the i-th (i=1,2,...,C/L) layer of the first window in the input data is fetched to obtain one piece of the first depth data.

Operation 4, second depth data of the i-th (i=1,2,...,C/L) layer of the f-th (f=1,2,...,K/M) convolution kernel group are fetched to obtain M pieces of the second depth data.

Operation 5, MAC operations are performed, using the MAC array, on the one piece of the first depth data and M pieces of the second depth data (weighted data broadcast multiplexing), to obtain M pieces of first operation data. M weight data segments are weight data segments of M convolution kernels.

Operation 6, incrementing i, the operations 3-5 are repeated. M pieces of first operation data are output and accumulated to the previously calculated M pieces of first operation data, so far, M pieces of target operation data are obtained, where i starts from 1 and increases to C/L.

Operation 7, incrementing f, the operations 3-5 are repeated. K pieces of outputs are obtained after completing K/M calculations, where k starts from 1 and increases to K/M.

The height H, the width W, and the depth C of the input data are random, that is, the size of the input data can have many formats. For example, the width W of the input data is uncertain, the width W of the input data is divided by M (i.e., the number of the units performing MAC operations using the MAC array in parallel), the result is not an integer in most cases, so part of the MAC operation units may be wasted during the MAC operation processes. In the embodiment, the number of the convolution kernels K is divided by M (i.e., the number of the units performing MAC operations using the MAC array in parallel), the number of the convolution kernels K is generally a fixed number and is the nth power of 2 (i.e., 2n), or may be one of several limited numbers (e.g., K is one of 32, 64, 128, 256), as such, when configuring the MAC operation units, the number of the MAC operation units M can be set to be the same or an integral a plurality of of the number of K, for example, M is one of 32, 64, 128, etc. The embodiment can make full use of the MAC operation units, reduce the waste of the MAC operation units, and improve the efficiency of the convolution operation. In the embodiment, the number of the convolution kernels K is corresponding to the number of the MAC operation units M, this is a division in one dimensional direction. If the number of the MAC units M corresponds to the sliding window area, its corresponding dimensions include not only the width W dimension but also the H dimension, and such a correspondence of the two dimensions is not conducive to folding.

In addition, the format of the output target calculation data in this embodiment is represented as H'×W'×K, which is the same as the format of the input data. It can be directly used as the input data of a next calculation layer (e.g., a next convolution layer or a next pooling layer) without deforming it. Moreover, the target calculation data is continuous data in the depth direction, and the continuous data can be stored and read in sequence. When the hardware loading the continuous data, there is no need to calculate the address of the data a plurality of times, thereby optimizing the calculation efficiency.

It can be noted that in this embodiment, C is greater than L, K is greater than M, when one or two of C/L and K/M are not divisible, it is necessary to round the undivisible result and add 1, specifically, the integer portion of the result is added 1. Exemplarily, L and M in the MAC Array adopt the same value, such as both are 64. The input data is filled in the depth direction according to the length of 64 granularity. It is divided, along the depth direction, into 1x1x64 data blocks. When the depth is less than 64, the depth is filled to 64. The data organization method is N×H×W× (c×C'), where c=64, C' is equal to 1 plus a rounded result of dividing C by c. The weight data is filled in the depth direction according to the length of 64 granularity. The weight data is divided, along the depth direction, into 1×1×64 data blocks. When the depth is less than 64, it is filled to 64. When the number of the convolution kernels is greater than 64, it is divided into a plurality of groups according to each group of 64 granularity. After adjusting, the data organization method is R×S× (c×C') × (k×K'), where c=64, C' is equal to 1 plus a rounded result of dividing C by c, k=64, K' is equal to 1 plus a rounded result of dividing K by k.

In the convolution operation processing of this embodiment, the convolution processing unit is further configured to transmit K target operation data corresponding to one window area to the next layer for operations; or the convolution processing unit is configured to transmit N×K target operation data, corresponding to the N first window areas, to the next layer for operations, where N is less than a total number of the first window areas in the output data.

Because each first window area has been fully calculated, that is, all data in each first window area (including the depth direction) are performed MAC operations with all convolution kernels (including the depth direction), the obtained target calculation data is complete, then one or more target calculation data corresponding to one or more first window areas can be transmitted to the next layer first, there is no need to wait for all input data to be completed before transmitting. When a part of the target calculation data transmitted to the next layer can be used as the smallest unit of another next layer calculation (for example, the part of the target calculation data can be used as the data included in a window area of the input data of another next layer), another next layer can start calculation, and it is unnecessary to wait for all the operation results of an upper layer. As such, the efficiency of the convolution operation is improved and the time of the convolution operation is shortened. In addition, because the internal buffer of the NPU where the convolution operation units located is generally small, it cannot store large intermediate results. If the format of the data obtained by the convolution operation is K× H' ×W', it is needed to complete all calculation of this layer before calculating a next layer, and the output data is large and can be cached in an external memory (i.e., a memory outside the neural network processor). However, in the embodiment, the format of the results obtained by the convolution operation is H' ×W' ×K, after calculating part of the results on the H' ×W' plane, a next layer can be directly calculated. The small internal buffer of the NPU only can store1×W' ×K or N1×W' ×K or N1×N2 ×K, where N1 can be much smaller than H', and N2 can be much smaller than W'. So, there is no need to cache the output result to external memory, and further read the result from the external memory for next layer operations. This can reduce the bandwidth pressure and improve the efficiency of operation. In addition, in Fusion Layer scenario, it is very convenient to perform pipeline operations.

When the target calculation data to be transmitted to the next layer has duplicate data with the target calculation data transmitted last time, the duplicate data is removed to obtain the target data, and the target data is transmitted to the next layer, thereby optimizing the storage and transmission of data. Of course, in an alternative way, the target calculation data can be completely transmitted every time, and the repeated data may be covered.

The length L of the MAC array performing the MAC operations can be equal to the number of the units M performing the MAC operation units in parallel. Because when the L and M of the MAC array are equal, values of the data in two dimensions obtained by the MAC operations are equal, the calculated results can be adjusted easily. Of course, in some other embodiments, L and M of the MAC array may be different to facilitate the setting of the MAC array.

The convolution processing unit is configured to: perform a window operation on the input data according to the convolution kernel to obtain the first window, which includes the first depth data of the first number of layers in the depth direction; obtain a plurality of convolution kernels, wherein the convolution kernels include the second depth data of the first number of layers along the depth direction; and perform MAC operations on the first depth data of one layer and the second depth data of the same layer of the convolution kernels to obtain the first operation data.

The convolution processing unit may also perform operations on a plurality of layers, and is further configured to accumulate a plurality of first operation data corresponding to the first depth data of a plurality of layers to obtain target operation data. That is, based on the singlelayer operation in the above embodiments, MAC operations are performed on the first depth data of a plurality of layers and the second depth data of a plurality of convolution kernels, to obtain the target operation data after accumulating a plurality of first operation data.

The convolution processing unit can store its operation result in the data storage module, and can also transmit the operation result to the vector processing unit or the shaping processing unit for further calculation operations.

The neural network processor 200 provided in the embodiments of the present disclosure can be integrated into one chip.

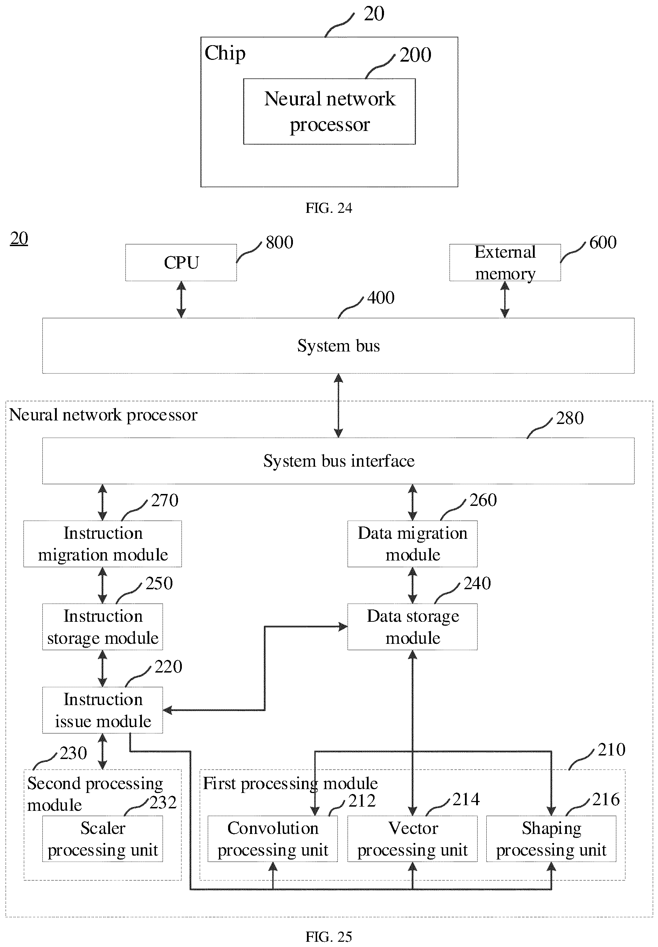

FIG. 24 illustrates a schematic structural diagram of a chip according to an embodiment of the present disclosure. A chip 20 includes a neural network processor 200, and details of the neural network processor 200 can refer to the above description and are not repeated here again. The chip 20 can be applied to an electronic device.

It can be noted that the neural network processor 200 of the embodiment can also be integrated with other processors, memories, and the like into the chip 20.

In order to explain the overall operation processes of the neural network processor 200 in the embodiment of the present disclosure, the following description is made in combination with other processors and memories.

Please refer to FIG. 25, which is a schematic structural diagram of an electronic device according to an embodiment of the present disclosure. An electronic device 20 includes a neural network processor 200, a system bus 400, an external memory 600, and a central processing unit 800. The neural network processor 200, the external memory 600, and the central processing unit 800 each are coupled to the system bus 400, so that the neural network processor 200 and the external memory 600 can cause data transmission.

The system bus 400 is coupled to the neural network processor 200 through a system bus interface 280. The system bus 400 may be coupled to the central processing unit 800 and the external memory 600 through other system bus interfaces.

The neural network processor 200 is controlled by the central processing unit 800 to obtain data to-be-processed from the external memory 600, process the data to-be-processed to obtain/acquire a processing result, and feedback the processing result to the external memory 600.

When it is needed to use the neural network processor 200 for data processing, an upper-layer driving software of the electronic device 20, such as the central processing unit 800, writes configurations of a current program to be executed into a corresponding register, for example, the configurations may include a working mode, an initial program counter (PC) value, configuration parameters, etc. Then, the data migration module 260 is configured to read the data to-be-processed, such as image data and weight data, from the external memory 600 through the system bus interface 280, and is configured to write the data to a data storage module 240. An instruction issue module 220 is configured to start to fetch one or more instructions according to the initial PC. After the one or more instructions are fetched, the instruction issue module 220 is configured to issue the instructions to corresponding processing units according to the types of the instructions. Each processing unit is configured to perform different operations according to specific instructions, and then is configured to write the results to the data storage module 240.

The register is a configuration status register of the neural network processor 200, or is called a control status register. It can set the working mode of the neural network processor 200, such as a bit width of input data, a position of the initial PC of the program, and so on.

It can be noted that the neural network processor shown in FIG. 25 can also be replaced with other neural network processors shown in other figures.

The following describes the disclosure from the perspective of data processing method and data loading method through a neural network processor.

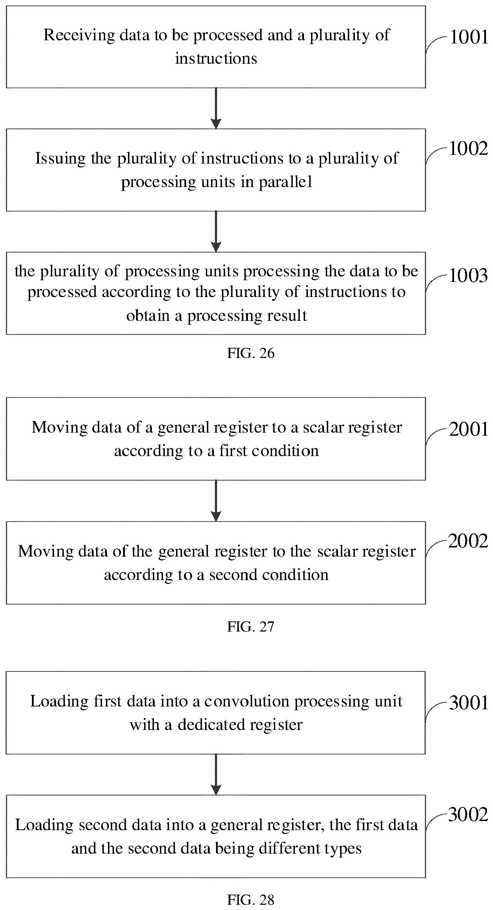

FIG. 26 illustrates a flowchart of a data processing method according to an embodiment of the present disclosure. The data processing method is based on the above-mentioned neural network processor to process data. The data processing method includes the follows.

At block 1001, data to-be-processed and a plurality of instructions are received. The data to-be-processed may be image data and weight data that can be processed by the neural network processor. A data migration module 260 can be used to read the data to-be-processed from an external memory 600 through a system bus interface 280. Of course, a DMA260b can also be used to move the data to-be-processed from the external memory through a system bus interface 266b. After receiving the data to-be-processed, the data to-be-processed can be loaded into a data storage module 240.

The plurality of instructions may be calculation instructions or control instructions. An instruction migration module 270 can be used to read the required instructions from the external through the system bus interface 280. Of course, the DMA 260b can also be used to migrate the required instructions from the external through the system bus interface 266b. It can also be configured to write instructions directly to the neural network process 200 from the external. After receiving the plurality of instructions, the instructions can be loaded into an instruction storage module 250.

At block 1002, the plurality of instructions are issued to a plurality of processing units in parallel. An instruction issue module 220 of the neural network processor 200 can be configured to issue the instructions to their respective processing units within one clock cycle according to the received instructions, so that each processing unit processes the data to-be-processed according to their respective instructions. The instruction issue module 220 can be configured to issue the plurality of instructions to at least two processing units included in a first processing module 210 within one clock cycle. The instruction issue module 220 may be configured to issue the plurality of instructions to a scalar processing unit 232 and at least one processing unit of the first processing module 210 within one clock cycle.

It can be noted that, in order to ensure that the instructions issued by the instruction issue module 220 are all useful, in other words, in order to ensure that each processing unit processes the data according to their respective instructions after the instruction issue module 220 issuing the instructions, the instruction issue module 220 is configured to send a judgment signal to the data storage module 240 before issuing the instructions, the instruction distribution module 220 first is configured to send a judgment signal to the data storage module 240, when a return signal is returned from the data storage module 240, the instruction issue module 240 is configured to determine whether the data storage module 240 is configured to store the data to-be-processed according to the return signal. If the instruction issue module 220 is configured to determine that the data storage module 240 does not store the data to-be-processed, the instruction issue module 240 will not issue instructions to each processing unit. Only when the instruction issue module 220 is configured to determine that the data storage module 240 has the data to-be-processed stored therein, the instruction issue module 240 will issue the instructions to the processing units.

At block 1003, the plurality of processing units are configured to process the data to-be-processed according to the plurality of instructions to obtain one or more processing results. Each processing unit 230 is configured to obtain a corresponding processing result after processing the data to-be-processed. In the embodiment of the present disclosure, the plurality of processing units 230 may also be configured to write their processing results to the data storage module 240. Furthermore, the data migration module 260 and the system bus interface 280 can be configured to transmit the processing results to an external memory 600.

After completing the data processing, if the instruction issue module 220 of the neural network processor is configured to receive a terminate identification instruction, it is configured to consider that the program has been executed over and is configured to issue an interrupt to an upper-layer software to terminate the work of the neural network processor 200. If it is not terminated, it is configured to return to block 1002 and continue to fetch instructions to execute instruction issue until the program has been executed over.

FIG. 27 illustrates a flowchart of a data processing method according to an embodiment of the present disclosure. The data processing method is based on the above-mentioned neural network processor to process data. The data processing method includes the follows.

At block 2001, data of a general register is moved to a scalar register according to a first condition. The first condition can be a first instruction. A data migration engine 204 can be configured to move the data of the general register 290 to the scalar register 2322 according to the first instruction, and details can refer to the above content, which will not be repeated here.

At block 2002, data of the general register is moved to the scalar register according to a second condition. The second condition can be a second instruction. The data migration engine 204 can be configured to move the data of the scalar register 2322 to the general register 290 according to the second instruction, and details can refer to the above content, which will not be repeated here.

FIG. 28 illustrates a flowchart of a data loading method according to an embodiment of the present disclosure. The data loading method is based on the above neural network processor 200 to load data, and the data loading method includes the following operations.

At block 3001, first data is loaded into a convolution processing unit with a dedicated register. The convolution processing unit 212 with the dedicated register 2122 can refer to the above content and details are not repeated here again.

At block 3002, second data is loaded into a general register, wherein the first data and the second data are different types. The general register 290 can refer to the above content, which will not be repeated here. In the embodiments of the present disclosure, an LSU 202 can be used to load or transmit data. Specific data loading or transmitting method can refer to the above description. The first data and the second data also can refer to the above description, which will not be repeated here.

The neural network processor, the chip, and the electronic device provided in the embodiments of the present disclosure are described in detail above. Specific examples are used in this article to illustrate the principle and implementation of the disclosure, and the description of the above examples is only used to help understand the disclosure. Meanwhile, for those skilled in the art, according to the spirit of the disclosure, there will be changes in the specific implementation and the scope of disclosure. In summary, the content of this specification can not be construed as a limitation to the disclosure.

## Claims

1. A neural network processor, comprising:
a data migration engine;
a general register coupled to the data migration engine; and
a scalar processing unit comprising a plurality of scalar registers, wherein the data migration engine is coupled to at least one of the scalar registers;
wherein the data migration engine is configured to cause data interaction between the scalar processing unit and the general register.

2. The neural network processor according to claim 1, wherein the data migration engine is further configured to move a data to at least one of the scalar registers, when the data stored in the general register is to be judged.

3. The neural network processor according to claim 1, wherein the data migration engine is further configured to move a scalar data to the general register, when the scalar data stored in at least one of the scalar registers is to be transformed.

4. The neural network processor according to claim 1,
wherein the general register comprises a plurality of vector registers,
wherein the data migration engine is coupled to at least one of the vector registers, and the data migration engine is further configured to cause data interaction between the scalar register and the vector register.

5. The neural network processor according to claim 4,
wherein the general register comprises a plurality of prediction registers,
wherein the data migration engine is coupled to at least one of the prediction registers, and the data migration engine is further configured to cause data interaction between the scalar register and the prediction registers.

6. The neural network processor according to claim 5, further comprising:
a convolution processing unit coupled to the general register; and
an instruction issue module, wherein the instruction issue module is coupled to the scalar processing unit and the convolution processing unit, and the instruction issue module is configured to issue a plurality of instructions to the scalar processing unit and the convolution processing unit in parallel.

7. The neural network processor according to claim 6, wherein the instruction issue module is further configured to issue the plurality of instructions to the scalar processing unit and the convolution processing unit in parallel within one clock cycle.

8. The neural network processor according to claim 6, wherein the instruction issue module is further configured to issue the plurality of instructions to the scalar processing unit and the convolution processing unit in parallel, according to types of the plurality of instructions.

9. The neural network processor according to claim 6,
the plurality of instructions issued by the instruction issue module comprises a fine-grained instruction,
wherein the instruction issue module is configured to issue the fine-grained instruction to the convolution processing unit, and
the convolution processing unit is configured to perform, according to the fine-grained instruction, a dot product operation on received data.

10. The neural network processor according to claim 6, further comprising:
a vector processing unit coupled to the instruction issue module, wherein the vector processing unit is also coupled to the general register,
wherein the instruction issue module is further configured to issue the plurality of instructions to the convolution processing unit, the vector processing unit, and the scalar processing unit in parallel.

11. The neural network processor according to claim 10, further comprising:
a shaping processing unit coupled to the instruction issue module, and the shaping processing unit is also coupled to the general register,
wherein the instruction issue module is configured to issue the plurality of instructions to the convolution processing unit, the vector processing unit, the scalar processing unit, and the shaping processing unit in parallel.

12. The neural network processor according to claim 6, further comprising
a data storage module configured for data storage, wherein the data storage module is coupled to the general register;
the instruction issue module is further configured to:
issue the plurality of instructions in parallel when the data storage module has data to-be-processed stored therein;
not issue the plurality of instructions when the instruction cache unit has no data to-be-processed stored therein.

13. The neural network processor according to claim 12, wherein the data storage module is further coupled to the scalar processing unit.

14. The neural network processor according to claim 12, further comprising:
a system bus interface, wherein the system bus interface is configured to be coupled to a system bus;
a data migration module, wherein the data migration module is coupled to the data storage module and the system bus interface, and the data migration module is configured to move data; and
an instruction storage module, the instruction storage module is coupled to the instruction issue module and is configured to store one or more instructions that are to be issued by the instruction issue module;
an instruction migration module, wherein the instruction migration module is coupled to the data storage module and the system bus interface, and the instruction migration module is configured to move instructions.

15. The neural network processor according to claim 12, further comprising:
a system bus interface, wherein the system bus interface is configured to be coupled to a system bus;
a data migration module, wherein the data migration module is coupled to the data storage module and the system bus interface, and the data migration module is configured to move data; and
an instruction storage module, wherein the instruction storage module is communication with the instruction issue module and the system bus interface, and the instruction storage is configured to store all instructions that are to be issued by the instruction issue module.

16. The neural network processor according to claim 12, further comprising:
a system bus interface, wherein the system bus interface is configured to be coupled to a system bus;
a direct memory access, wherein the direct memory access comprises at least one physical channel, at least one logical channel, and a first arbitration unit,
wherein the at least one physical channel and at least one logical channel are coupled to the system bus interface through the first arbitration unit, the at least one physical channel is coupled to the instruction storage module, and the at least one logical channel is coupled to the data storage module.

17. The neural network processor according to claim 12, wherein the convolution processing unit further comprises a plurality of dedicated registers;
wherein the neural network processor further comprises:
a load storage module, wherein the load storage module is coupled to the general register and the data storage module, the load storage module is also coupled to at least one of the dedicated registers of the convolution processing unit, the load storage module and the data storage module are integrated together; or the load storage module and the data storage module are set separately;
the load storage module is configured to load data in the data storage module into at least one of the general register or dedicated register of the convolution processing unit, and the load storage module is also configured to store data of the general register to the data storage module.

18. The neural network processor according to claim 17, wherein the data stored by the data storage module comprises first data and second data, one of the first data and the second data is image data, and the other of the first data and the second data is weight data;
wherein the load storage module is further configured to load the first data into at least one of the dedicated registers of the convolution processing unit and to load the second data to the general register;
the convolution processing unit is further configured to obtain the second data from the general register.

19. A chip, comprising:
a system bus;
an external memory;
a central processing unit; and
a neural network processor as claimed in any one of claims 1-18;
wherein the neural network processor coupled to both of the external memory and the central processing unit via the system bus, and the neural network processor is controlled by the central processing unit to obtain data to-be-processed from the external memory, process the data to-be-processed to obtain a processing result, and feed back the processing result to the external memory.

20. An electronic device, comprising:
a system bus;
an external memory;
a central processing unit; and
a neural network processor as claimed in any one of claims 1-18;
wherein the neural network processor coupled to both of the external memory and the central processing unit via the system bus, and the neural network processor is controlled by the central processing unit to obtain data to-be-processed from the external memory, process the data to-be-processed to obtain a processing result, and feed back the processing result to the external memory.
